# EUROPEAN PATENT SPECIFICATION

(11) **EP 3 960 515 B1**
(45) Date of publication and mention of the grant of the patent: **05.07.2023**
(21) Application number: 21191757.0
(22) Date of filing: 17.08.2021
(51) Int. Cl.: B60K 35/00, B60K 37/02, B62J 50/20

(54) **STRADDLED VEHICLE**
GRÄTSCHSITZFAHRZEUG
VÉHICULE À ENFOURCHER

(30) Priority: 28.08.2020 JP 2020144310
(43) Date of publication of application: 02.03.2022
(73) Proprietor: Yamaha Hatsudoki Kabushiki Kaisha, Iwata-shi, Shizuoka-ken 438-8501 (JP)
(72) Inventor: SATONAKA, Yukinari, Shizuoka, 438-8501 (JP)
(74) Representative: Marks & Clerk LLP

(56) References cited:
- US-A1- 2013 158 792
- US-A1- 2017 334 500
- US-B2- 8 628 103

## Description

### FIELD OF INVENTION

The present invention relates generally to a straddled vehicle, and in particular, though not exclusively, to a straddled vehicle provided with or having a meter unit.

### SUMMARY OF INVENTON

Japanese Unexamined Patent Publication No. 2011-68354A (YAMAHA MOTOR CO LTD) discloses a motorcycle. Hereinunder, numerals in Japanese Unexamined Patent Publication No. 2011-68354A are expressed in parentheses. A motorcycle (1) includes a meter unit (240). The meter unit (240) includes an image display device (100). The image display device (100) in Fig. 5 of Japanese Unexamined Patent Publication No. 2011-68354A displays a plurality of images at the same time. The plurality of images displayed on the image display device (100) at the same time indicate, for example, a simple navigation display (50), a speedometer (30), a tachometer (31), and an odometer (32).

The image display device (100) displays the plurality of the images on one screen. As a result, it is sometimes hard for a driver of the motorcycle (1) to intuitively distinguish and recognize display contents indicated by the plurality of the images. For example, when the driver sees the image display device (100), it may be hard for the driver to immediately understand the display contents indicated by the plurality of the images displayed on the image display device (100).

This invention has been made regarding the state of the art noted above, and its object is to provide a straddled vehicle that allows a driver to recognize display contents of a meter unit easily.

The Inventors searched for the reason why it is hard for a driver to grasp display contents of a meter unit. The screen of the display is divided into a plurality of display regions. The display contents are each allocated to one of the display regions. The display regions each display an image indicating the allocated display content. However, contours of the display regions are not always distinct. For example, a boundary between two adjacent display regions may be hard to understand. For example, it may be difficult to identify a boundary between two adjacent images. Accordingly, the Inventors supposed that the indistinct boundary between the images is one of the reasons why it is particularly difficult for the driver operating a straddled vehicle to intuitively distinguish and recognize the display contents of the meter unit.

Then, the Inventors studied a meter unit provided with a first screen and a second screen. Specifically, the Inventors studied arrangement of the first screen and the second screen side by side in a transverse direction of the vehicle. Here, all image displayed on the first screen are collectively referred to as a first image. In order to distinguish the first image and the images included in the first image more clearly, the images included in the first image are referred to as pictures. All images displayed on the second screen are collectively referred to as a second image. In order to distinguish the second image and the images included in the first image more clearly, the images included in the first image are referred to as pictures. With the meter unit structured in such a manner as above, the boundary between the first image and the second image never becomes indistinct. In addition, the number of display contents indicated by the first image can be suppressed. This can suppress the number of pictures contained in the first image. Accordingly, the pictures contained in the first image can be arranged in the first screen orderly. Consequently, indistinct boundaries between adjacent pictures contained in the first image can be suppressed. For the similar reason to the above, indistinct boundaries between adjacent pictures contained in the second image can be suppressed. As a result, the driver can easily grasp the display contents of the meter unit.

On the other hand, the Inventors found that the meter unit provided with the first screen and the second screen possesses additional three drawbacks.

The first drawback concerns visibility of an end portion of the first screen and an end portion of the second screen. Since the first screen and the second screen are arranged side by side in the transverse direction of the vehicle, the entire of the first screen and the second screen elongates in the transverse direction of the vehicle. Here, it is assumed that the second screen is positioned rightward of the first screen. In this case, a left end portion of the first screen and a right end portion of the second screen are hard to be seen by the driver. For example, the left end portion of the first screen is harder to be seen by the driver than a right end portion of the first screen. For example, the right end portion of the second screen is harder to be seen by the driver than a left end portion of the second screen.

The second drawback concerns glare. As described above, the entire of the first screen and the second screen elongates in the transverse direction of the vehicle. Accordingly, the sun or other objects may be reflected on at least either the first screen or the second screen. In other words, at least either the first screen or the second screen may reflect the sun or other objects toward the driver. To the driver, the sun or other objects appear to be superimposed on at least either the first image or the second image. Here, examples of the other objects include a scene around the straddled vehicle. Consequently, it is hard for the driver to visibly recognize both the first image and the second image distinctly.

The third drawback concerns forward visibility with respect to the straddled vehicle. As described above, the entire of the first screen and the second screen elongates in the transverse direction of the vehicle. Accordingly, the meter unit may inhibit forward visibility for the driver with respect to the straddled vehicle.

Then, the Inventors made further study to overcome the additional three drawbacks.

It is an object of at least one embodiment of at least one aspect of the present invention to seek to obviate or at least mitigate one or more problems and/or disadvantages in the prior art.

US 2017/334500 A1 (JAREK ET AL) describes systems and methods to present information to recreational vehicle riders and to provide customizable visual information to recreational vehicle riders. It further describes systems and methods to connect and transmit audio information between a driver portable communication device and a driver audio interface device through the recreational vehicle and audio information between a passenger portable communication device and a passenger audio interface device.

US 2013/158792 A1 (KOBAYASHI ET AL) describes a meter display device provided in a vehicle, including a display portion having a display region in which a plurality of display areas extending elongatedly in the left-right direction of a meter body are provided in proximity in a line arrangement in the orthogonal direction orthogonal to the left-right direction, and a display control portion switching each of the display areas between the display operated state and the non-display operated state and increasing the number of the display areas display-operated.

US 8628103 B2 (KAWAI ET AL) describes a handlebar support structure for sandwiching a steering handlebar between a lower holder and an upper holder including an instrument mounting area for supporting an instrument panel unit fitted removably thereto and a shield mounting area for supporting a windshield fitted removably thereto. The instrument mounting area and the shield mounting area are formed integrally with each other. The instrument mounting area and the shield mounting area altogether represent a forwardly pursed shape along a direction conforming to a forwardly tilted direction.

### SUMMARY OF INVENTION

Various aspects of the present invention are defined in the independent claim(s) appended hereto. Some optional and/or preferred features are defined in the dependent claims appended hereto.

According to one aspect of the present invention there is provided a straddled vehicle, the straddled vehicle comprising a meter unit, the meter unit comprising a first display provided with a first screen on which a first image is displayable or displayed, and a second display provided with a second screen on which a second image is displayable or displayed, wherein the first screen is located leftward of a vehicle center plane perpendicular with respect to a transverse direction of the vehicle, the second screen being located rightward of the vehicle center plane, the second screen being substantially equal to the first screen in size, the first screen and the second screen being each inclined forward and upward at an angle of 45 degrees or more relative to a horizontal plane, the first screen being inclined leftward and rearward in plan view of the vehicle, the second screen being inclined rightward and rearward in plan view of the vehicle, the first display and the second display being arranged side-by-side in the transverse direction of the vehicle and being spaced apart from each other, and the meter unit forming a center space positioned rightward of the first display and leftward of the second display.

The straddled vehicle may comprise or include the meter unit. The meter unit may comprise or include the first display and/or the second display. The first display may comprise or include the first screen. The first screen may display the first image. The second display may comprise or include the second screen. The second screen may display the second image. Consequently, an indistinct boundary between the first image and the second image can be suitably suppressed.

The second screen may be substantially equal to the first screen in size. Accordingly, the number of display contents indicated on the first screen can be suitably suppressed and the number of display contents indicated on the second screen can be suitably suppressed. This can suppress both the number of images contained in the first image and the number of images contained in the second image. As a result, the images contained in the first image can be arranged on the first screen regularly, and the images contained in the second image can be arranged on the second screen regularly. Consequently, indistinct boundaries between adjacent pictures contained in the first image can be suppressed, and indistinct boundaries between adjacent pictures contained in the second image can be suppressed. As a result, the driver can visibly recognize the first image and the second image distinctly. Specifically, the driver can visibly recognize the images contained in the first image and the images contained in the second image distinctly. Accordingly, the driver can easily grasp the display contents indicated on the first image and the display contents indicated on the second image.

The vehicle center plane may be an imaginary plane perpendicular with respect to the transverse direction of the vehicle. The first screen may be arranged leftward of the vehicle center plane. The second screen may be arranged rightward of the vehicle center plane. Accordingly, the entire of the first screen and the second screen may elongate in the transverse direction of the vehicle.

The first screen may be inclined forward and upward at an angle of 45 degrees or more relative to a horizontal plane. This can suitably prevent the first screen from reflecting the sun or other objects toward the driver. The second screen may be inclined forward and upward at an angle of 45 degrees or more relative to a horizontal plane. This can suitably prevent the second screen from reflecting the sun or other objects toward the driver. As a result, the driver can visibly recognize the first image and the second image distinctly.

Hereinunder, the reflection of the sun or other objects toward the driver by the first screen is referred to as "glare on the first screen". The reflection of the sun or other objects toward the driver by the second screen is referred to as "glare on the second screen".

The first screen may be inclined leftward and rearward in plan view of the vehicle. This can suitably suppress difficulty for the driver in visibility of the left end portion of the first screen. As a result, the driver can visibly recognize even a part of the first image at the left end portion of the first screen distinctly. The second screen may be inclined rightward and rearward in plan view of the vehicle. This can suitably suppress difficulty for the driver in visibility of the right end portion of the second screen. As a result, the driver can visibly recognize even a part of the second image at the right end portion of the second screen distinctly.

The first display and the second display may be arranged side-by-ide in the transverse direction of the vehicle. The first display and the second display may be spaced apart from each other. The meter unit may form the center space. The center space may be positioned rightward of the first display and/or leftward of the second display. Accordingly, the center space may be arranged rightward of the first screen and/or leftward of the second screen. Consequently, an indistinct boundary between the first image and the second image can be suppressed more suitably. In addition, the driver can visibly recognize a road surface and other vehicles in front of the straddled vehicle through the center space. As described above, the center space can suitably enhance the forward visibility for the driver with respect to the straddled vehicle.

As described above, the straddled vehicle according to this invention may allow the driver to recognize the display contents of the meter unit easily. Moreover, the straddled vehicle according to this invention may allow the driver to visibly recognize the first screen and the second screen as well as forward of the straddled vehicle distinctly.

It may be preferred in the straddled vehicle described above that the first screen may be a rectangle elongated in the transverse direction of the vehicle, and/or that the second screen may be a rectangle elongated in the transverse direction of the vehicle. The entire or entirety of the first screen and the second screen may be (much) longer in the transverse direction of the vehicle. However, even when the entire or entirety of the first screen and the second screen is (much) longer in the transverse direction of the vehicle, the straddled vehicle according to this invention can suitably suppress the glare on the first screen and the glare on the second screen. Even when the entire or entirety of the first screen and the second screen is (much) longer in the transverse direction of the vehicle, the straddled vehicle according to this invention can suitably provide visibility of the left end portion of the first screen and the right end portion of the second screen. Accordingly, the longer the entire or entirety of the first screen and the second screen may be in the transverse direction of the vehicle, the more useful the straddled vehicle according to this invention becomes.

It is preferred in the straddled vehicle described above that one of the first image and the second image may comprise or include a third image indicating an engine speed of the straddled vehicle, and/or a fourth image indicating a speed of the straddled vehicle, and/or the other of the first image and the second image may comprise or include neither an image indicating the engine speed of the straddled vehicle nor an image indicating the speed of the straddled vehicle. The third image indicates an engine speed of the straddled vehicle. The fourth image may indicate a speed of the straddled vehicle. For example, when the first image comprises or includes the third image and the fourth image, the second image may comprise or include neither an image indicating the engine speed of the straddled vehicle nor an image indicating the speed of the straddled vehicle. For example, when the second image may comprise or include the third image and the fourth image, the first image may comprise or include neither an image indicating the engine speed of the straddled vehicle nor an image indicating the speed of the straddled vehicle. As described above, the first screen may differ from the second screen in display content. Consequently, the driver can easily recognize the display contents of the meter unit. Moreover, both the third image and the fourth image may be displayed on either the first screen or the second screen. Accordingly, the third image may be positioned relatively close to the fourth image. This may allow the driver to grasp the display contents of the third image and the display contents of the fourth image easily.

It may be preferred in the straddled vehicle described above that the meter unit may comprise or include a plurality of first indicators located above the first screen, and/or a plurality of second indicators located above the second screen. The driver can easily grasp the display contents indicated by the first indicators and the display contents indicated by the second indicators.

It may be preferred in the straddled vehicle described above that the first indicators may be lined up in a leftward and rearward direction, and/or the second indicators may be lined up in a rightward and rearward direction. The first indicators may be lined up in the leftward and rearward direction. Accordingly, the driver can visibly recognize each of the first indicators distinctly. For example, the driver can visibly recognize even one of the first indicators located at the most leftward distinctly. The second indicators may be lined up in the rightward and rearward direction. Accordingly, the driver can visibly recognize each of the second indicators distinctly. For example, the driver can visibly recognize even one of the second indicators located at the most rightward distinctly.

It may be preferred in the straddled vehicle described above that the meter unit comprises or includes a first eaves part which may be located above the first screen, and/or a second eaves part which may be located above the second screen. The first eaves part can suppress the glare on the first screen suitably. The second eaves part can suppress the glare on the second screen suitably.

It may be preferred in the straddled vehicle described above that the first eaves part may extend from a position more rightward than the first screen to a position more leftward than the first screen, and/or the second eaves part may extend from a position more rightward than the second screen to a position more leftward than the second screen. The first eaves part can suppress the glare on the first screen more suitably. The second eaves part can suppress the glare on the second screen more suitably.

It may be preferred in the straddled vehicle described above that the meter unit may comprise or include a first case which may be configured to accommodate the first display, and/or a second case which may be configured to accommodate the second display, the first case and the second case may be arranged side-by-side in the transverse direction of the vehicle and/or may be spaced apart from each other, and/or the center space may be arranged rightward of the first case and/or leftward of the second case. The first case may accommodate the first display. The second case may accommodate the second display. The first case and the second case may be arranged side-by-side in the transverse direction of the vehicle. The first case and the second case may be spaced apart from each other. The center space may be located rightward of the first case and/or leftward of the second case. As described above, the first case and the second case can define the center space suitably.

It may be preferred in the straddled vehicle described above that the meter unit may comprise or include a third case which may be connected to a right lower portion of the first case and/or a left lower portion of the second case, and/or may extend downward from the first case and the second case, and/or the center space may be located above the third case. The third case may extend downward from the first case and/or the second case. This can suitably prevent the third case from obstructing the forward visibility of the straddled vehicle for the driver. Consequently, the center space can suitably obtain the visibility forward of the straddled vehicle for the driver.

It may be preferred in the straddled vehicle described above that the meter unit may comprise or include a first drive board which may be accommodated in the first case and/or located in front of the first screen, a second drive board which may be accommodated in the second case and/or located in front of the second screen, and/or a third drive board which may be accommodated in the third case, wherein the first drive board, the second drive board, and the third drive board may be connected to one another electrically, and/or the first drive board, the second drive board, and the third drive board entirely drive the first display and the second display. A drive board configured to drive the first display and the second display may be divided into three (i.e., first drive board, second drive board, and third drive board). Accordingly, the first drive board, the second drive board, and the third drive board can each be reduced in size easily. This can obtain reduction in size of the first case, the second case, and the third case easily. This can also enhance flexibility in relative position among the first case, the second case, and the third case suitably. That is, flexibility in shape of the meter unit can be enhanced suitably.

It may be preferred in the straddled vehicle described above that at least part of the first drive board may overlap at least part of the first screen in rear view of the vehicle, and/or at least part of the second drive board may overlap at least part of the second screen in rear view of the vehicle. This can obtain reduction in size of the first case and the second case more easily.

It may be preferred in the straddled vehicle described above that the third case may have an insertion port located in a front face of the third case and connectable a cable connector. The insertion port may be located in the front face of the third case. Accordingly, the insertion port may be located at a position invisible to the driver. Consequently, the center space can suitably provide the visibility forward of the straddled vehicle for the driver.

It may be preferred in the straddled vehicle described above that the meter unit may comprise or include a casing configured to accommodate the first display and the second display, wherein the straddled vehicle may further comprise or include a plurality of first elastic bodies attached to the casing, a bracket made of synthetic resin and/or configured to support the casing via the first elastic bodies, a plurality of second elastic bodies attached to the bracket, and/or a stay configured to support the bracket via the second elastic bodies. The meter unit may comprise or include the casing. The casing may accommodate the first display and the second display. The first elastic bodies may be disposed between the casing and the bracket. The second elastic bodies may be disposed between the bracket and the stay. The first elastic bodies and/or the second elastic bodies may (each) absorb vibration. The bracket may be made of synthetic resin. Accordingly, the bracket itself may absorb vibration. Consequently, the first elastic bodies, the bracket, and the second elastic bodies can suitably suppress transmission of vibration from the stay to the casing. As a result, the first display and the second display can be protected from vibration suitably.

It may be preferred in the straddled vehicle described above that the number of the second elastic bodies may be smaller than the number of the first elastic bodies. This can simplify the configuration that the stay supports the bracket. As a result, flexibility in shape of the stay can be enhanced suitably.

It may be preferred that the straddled vehicle described above may further comprise or include a handlebar located behind the meter unit, and/or a windscreen located in front of and/or above the meter unit. This can arrange the meter unit at a right position.

### BRIEF DESCRIPTION OF DRAWINGS

Embodiments of the present invention will now be described, by way of example only, with reference to the accompanying drawings, which are:
- **Fig. 1**: a left side view of a straddled vehicle according to an embodiment;
- **Fig. 2**: a left side view of a front portion of the straddled vehicle;
- **Fig. 3**: a rear view of the front portion of the straddled vehicle seen from rearward;
- **Fig. 4**: a rear view of the front portion of the straddled vehicle seen from rearward;
- **Fig. 5**: a plan view of the front portion of the straddled vehicle;
- **Fig. 6**: a perspective view seen from a direction Q in Fig. 1;
- **Fig. 7**: one example of images displayed on a first screen;
- **Fig. 8**: one example of images displayed on a second screen;
- **Fig. 9**: another example of pictures displayed on the second screen;
- **Fig. 10**: a front view of a meter unit; and
- **Fig. 11**: a perspective view of a stay and second elastic bodies.

### DETAILED DESCRIPTION OF DRAWINGS

A straddled vehicle according to several embodiments of the present invention will be described below with reference to the accompanying drawings. A street type vehicle will be described as one example of the straddled vehicle.

### 1. Outline Construction of Straddled Vehicle 1

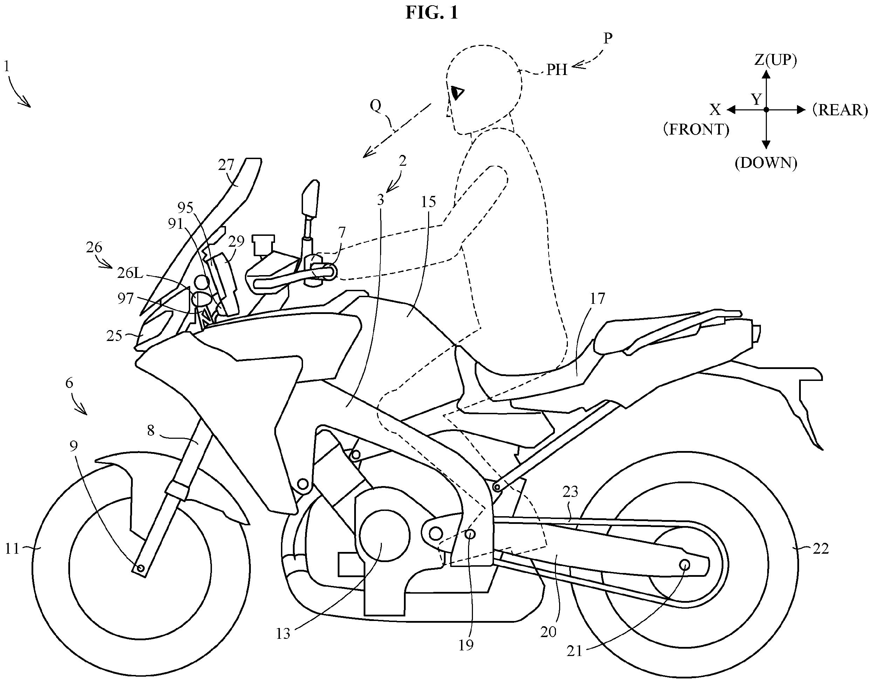

Fig. 1 is a left side view of a straddled vehicle according to an embodiment. The straddled vehicle 1 is, for example, a street type vehicle. A driver (also called rider) P rides on the straddled vehicle 1 and operates the straddled vehicle 1.

Fig. 1 shows a longitudinal direction X, a transverse direction Y, and an up-down direction Z of the straddled vehicle 1. The longitudinal direction X, transverse direction Y, and up-down direction Z are defined with reference to the driver P mounted on the straddled vehicle 1. The longitudinal direction X, transverse direction Y, and up-down direction Z are perpendicular to one another. The longitudinal direction X and transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver P mounted on the straddled vehicle 1. Unless otherwise stated in this specification, "forward" and "rearward" include not only directions parallel to the longitudinal direction X but also directions approximate to the longitudinal direction X. The directions approximate to the longitudinal direction X are, for example, directions at angles not exceeding 45 degrees to the longitudinal direction X. Similarly, unless otherwise stated, "rightward" and "leftward" include not only directions parallel to the transverse direction Y but also directions approximate to the transverse direction Y. Unless otherwise stated, "upward" and "downward" include not only directions parallel to the up-down direction Z but also directions approximate to the up-down direction Z. For reference, the drawings show front, rear, up, down, right, and left, as appropriate.

This specification uses various expressions describing arrangements, which have the following meanings, respectively. The following description will be made taking the transverse direction Y for example, and the same may be applied to the longitudinal direction X and up-down direction Z.

The expression "Member Ma is located more rightward/leftward than Member Mb," defines a position in the transverse direction Y of Member Ma relative to Member Mb, and does not define a position in the longitudinal direction X or the up-down direction Z of Member Ma relative to Member Mb. In the case of this expression, Member Ma may, or may not, overlap Member Mb in a side view of the vehicle.

The expression "Member Ma is located rightward/leftward of Member Mb," without reference to a looking direction defines a position in the transverse direction Y of Member Ma relative to Member Mb, a position in the longitudinal direction X of Member Ma relative to Member Mb, and a position in the up-down direction Z of Member Ma relative to Member Mb. This expression means that Member Ma is located more rightward/leftward than Member Mb, and that at least part of Member Ma overlaps at least part of Member Mb in a side view of the vehicle.

The expression "Member Ma is located rightward/leftward of Member Mb in a plan view of the vehicle," defines a position in the transverse direction Y of Member Ma relative to Member Mb, and a position in the longitudinal direction X of Member Ma relative to Member Mb, and does not define a position in the up-down direction Z of Member Ma relative to Member Mb. This expression means that Member Ma is located more rightward/leftward than Member Mb, and that the front end of Member Ma is located more forward than the rear end of Member Mb, and that the rear end of Member Ma is located more rearward than the front end of Member Mb.

The expression "Member Ma is located rightward/leftward of Member Mb in a front view of the vehicle," defines a position in the transverse direction Y of Member Ma relative to Member Mb, and a position in the up-down direction Z of Member Ma relative to Member Mb, and does not define a position in the longitudinal direction X of Member Ma relative to Member Mb. This expression means that Member Ma is located more rightward/leftward than Member Mb, the upper end of Member Ma is located higher than the lower end of Member Mb, and the lower end of Member Ma is located lower than the upper end of Member Mb.

The straddled vehicle 1 comprises a body frame 2. The body frame 2 includes a main frame 3. The main frame 3 extends rearward from a front part of the body frame 2. More specifically, the main frame 3 extends rearward and downward in side view of the vehicle.

The straddled vehicle 1 comprises a steering device 6. The steering device 6 is supported by the front part of the body frame 2. The steering device 6 is rotatable relative to the body frame 2.

The steering device 6 comprises a handlebar 7, a front suspension 8, and a front axle 9. The handlebar 7 is located in an upper part of the steering device 6. The front suspension 8 extends forward and downward from the handlebar 7. The front axle 9 is located in a lower part of the steering device 6. The front axle 9 is supported by the front suspension 8. The driver P of the straddled vehicle 1 grips the handlebar 7 and steers the steering device 6.

The straddled vehicle 1 comprises a front wheel 11. The front wheel 11 is supported by the steering device 6. Specifically, the front wheel 11 is supported by the front axle 9. The front wheel 11 is rotatable about the front axle 9.

The straddled vehicle 1 comprises an engine 13. The engine 13 generates power for traveling the straddled vehicle 1. The engine 13 is a water-cooled engine that uses a coolant. At least part of the engine 13 is located below the main frame 3 in the side view of the vehicle. The engine 13 is located behind the steering device 6 and the front wheel 11 in the side view of the vehicle. The engine 13 is supported by the body frame 2. For example, the engine 13 is supported by the main frame 3. The engine 13 is fixed to the body frame 2. The engine 13 does not swing relative to the body frame 2.

The straddled vehicle 1 has a transmission not shown. The transmission is, for example, located behind the engine 13. The transmission receives power generated by the engine 13. The transmission transmits the power. The transmission is switchable among a plurality of transmission ratios. Here, a transmission ratio is a ratio between a rotation speed of the power input to the transmission and a rotational speed of the power output from the transmission. The transmission includes a plurality of gears. The transmission selects one transmission ratio from the plurality of the transmission ratios by selectively using the gears. The transmission changes the rotation speed of the power input to the transmission with the selected transmission ratio. In the present specification, the selected transmission ratio is called gear position appropriately.

The straddled vehicle 1 comprises a fuel tank 15. The fuel tank 15 stores fuel. The fuel tank 15 is located more rearward than the steering device 6 and the front wheel 11 in the side view of the vehicle. The fuel tank 15 is located above the engine 13 in the side view of the vehicle. At least part of the fuel tank 15 is located above the main frame 3 in the side view of the vehicle. The fuel tank 15 is supported by the body frame 2.

The straddled vehicle 1 comprises a seat 17. The seat 17 is located behind the fuel tank 15. The seat 17 is located lower than an upper end of the fuel tank 15. At least part of the seat 17 is located at a position equal in level to the fuel tank 15 in the side view of the vehicle. The seat 17 is located more rearward and higher than the engine 13. The seat 17 is supported by the body frame 2.

The driver P sits straddling the seat 17, and puts on a knee grip. The knee grip is a holding of part of the straddled vehicle 1 between legs of the driver P. The part of the straddled vehicle 1 is, for example, at least part of the main frame 3 and the fuel tank 15.

The straddled vehicle 1 comprises a pivot shaft 19, a swing arm 20, a rear axle 21, and a rear wheel 22. The pivot shaft 19 is located more rearward than the engine 13 and the fuel tank 15. The pivot shaft 19 is located lower than the fuel tank 15 and the seat 17. The pivot shaft 19 is supported by the body frame 2. The swing arm 20 is supported by the pivot shaft 19. The swing arm 20 extends rearward from the pivot shaft 19. The swing arm 20 is swingable about the pivot shaft 19. The rear axle 21 is supported by a rear part of the swing arm 20. The rear wheel 22 is supported by the rear axle 21. The rear wheel 22 is rotatable about the rear axle 21.

The straddled vehicle 1 comprises a chain 23. The chain 23 connects the transmission to the rear wheel 22. The chain 23 transmits the power, output from the transmission, to the rear wheel 22. The rear wheel 22 rotates by the power transmitted from the chain 23. As described above, the transmission and the chain 23 transmit the power, generated by the engine 13, to the rear wheel 22.

The straddled vehicle 1 comprises a headlight 25. The headlight 25 is located more forward than the handlebar 7. The headlight 25 emits light for illuminating a road surface in front of the straddled vehicle 1.

The straddled vehicle 1 comprises a direction indicator 26. The direction indicator 26 is also called a flasher. The direction indicator 26 emits light for informing third persons of a change of course of the straddled vehicle 1. The direction indicator 26 includes a left direction indicator 26L and a right direction indicator not shown.

The straddled vehicle 1 comprises a windscreen 27. The windscreen 27 is a windshield. The windscreen 27 is transparent. The windscreen 27 is located in front of the handlebar 7 in the side view of the vehicle. The windscreen 27 is located above the headlight 25 in the side view of the vehicle. The windscreen 27 extends rearward and upward in the side view of the vehicle.

The straddled vehicle 1 comprises a meter unit 29. The meter unit 29 is located behind the headlight 25 in the side view of the vehicle. The meter unit 29 is located more forward than the seat 17. The meter unit 29 displays information. In the present specification, the information displayed by the meter unit 29 is called display contents. The display contents by the meter unit 29 correspond to information on the straddled vehicle 1, for example. The meter unit 29 displays the display contents to the driver P. Specifically, the meter unit 29 displays the display contents toward the head PH of the driver P. The head PH of the driver P is generally positioned more rearward and higher than the meter unit 29.

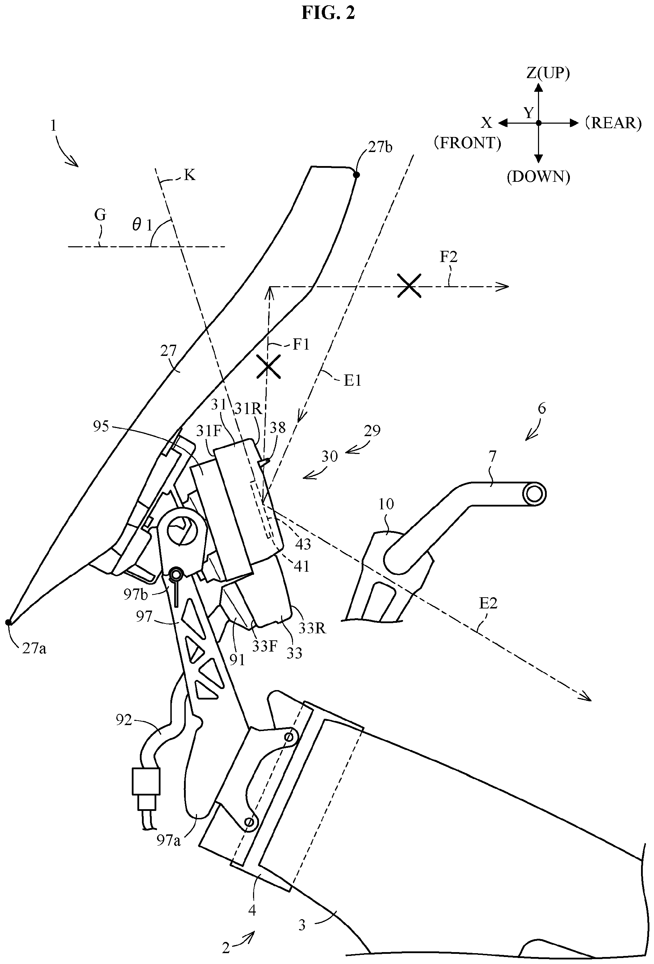

Fig. 2 is a left side view of a front portion of the straddled vehicle 1. Fig. 2 omits illustration of the front suspension 8, the headlight 25, and the like.

The body frame 2 comprises a head tube 4. The head tube 4 is located at a front part of the body frame 2. The head tube 4 is connected to the main frame 3. The main frame 3 extends rearward from the head tube 4. The head tube 4 is located lower than the handlebar 7. The head tube 4 is located lower than the meter unit 29. The head tube 4 is located higher than the front axle 9 and the front wheel 11. The head tube 4 extends forward and downward. The head tube 4 has a tube shape.

The steering device 6 is supported by the head tube 4. The steering device 6 is rotatable relative to the head tube 4. Specifically, the steering device 6 includes a steering shaft not shown. The steering shaft is inserted into the head tube 4. The steering shaft is rotatable about an axis of thereof relative to the head tube 4. The axis of the steering shaft corresponds to the rotation center of the steering device 6 with respect to the body frame 2.

The steering shaft supports the front suspension 8. For example, the steering device 6 includes an upper bracket not shown. The upper bracket is located above the head tube 4. The steering shaft supports the upper bracket. The upper bracket extends rightward and leftward from the steering shaft. The upper bracket supports the front suspension 8.

The steering device 6comprises two handlebar holders 10. The handlebar holders 10 support the handlebar 7. The handlebar holders 10 are supported by, for example, the upper bracket.

The meter unit 29 is located in front of the handlebar 7 in the side view of the vehicle. More specifically, the meter unit 29 is entirely located in front of the handlebar 7 in the side view of the vehicle.

At least part of the meter unit 29 is located at a position equal in level to the handlebar 7. For example, the meter unit 29 extends from a position lower than the handlebar 7 to a position higher than the handlebar 7.

The meter unit 29 is located behind and below the windscreen 27 in the side view of the vehicle. In other words, the windscreen 27 is located in front of and above the meter unit 29.

The windscreen 27 comprises a front end 27a. The meter unit 29 is located more rearward than the front end 27a in the side view of the vehicle. The meter unit 29 is entirely located more rearward than the front end 27a in the side view of the vehicle.

The meter unit 29 extends from a position lower than the front end 27a to a position higher than the front end 27a in the side view of the vehicle.

The windscreen 27 comprises a rear end 27b. The rear end 27b is located more rearward and higher than the front end 27a. The meter unit 29 is located more forward than the rear end 27b in the side view of the vehicle. The meter unit 29 is entirely located more forward than the rear end 27b in the side view of the vehicle.

The meter unit 29 is located lower than the rear end 27b in the side view of the vehicle. The meter unit 29 is entirely located lower than the rear end 27b in the side view of the vehicle.

The meter unit 29 is inclined forward and upward in the side view of the vehicle. The meter unit 29 displays the display contents toward rearward and upward.

### 2. Meter unit 29

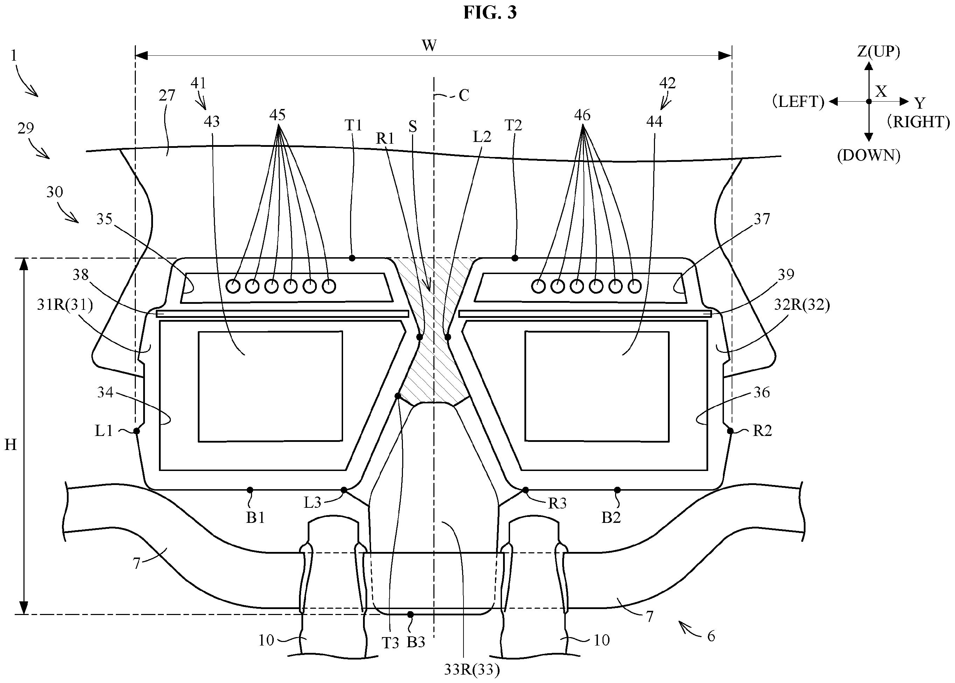

Fig. 3 is a rear view of the front part of the straddled vehicle 1 seen from rearward. Fig. 3 omits illustration of a bracket 95 and the like, which are to be mentioned later.

Fig. 3 shows a vehicle center plane C. The vehicle center plane C is an imaginary plane perpendicular with respect to a transverse direction Y. The vehicle center plane C passes through the center of the straddled vehicle 1.

The handlebar 7 is located on the vehicle center plane C. That is, the handlebar 7 intersects the vehicle center plane C. The windscreen 27 is located on the vehicle center plane C. The meter unit 29 is located on the vehicle center plane C. The head tube 4 is located on the vehicle center plane C, which illustration is omitted. The seat 17 is located on the vehicle center plane C, which illustration is omitted. The head PH of the driver P is generally positioned on the vehicle center plane C, which illustration is omitted.

Part of the meter unit 29 overlaps the handlebar 7 in rear view of the vehicle.

The handlebar 7 has a left end not shown, and a right end not shown. The meter unit 29 is located more rightward than the left end of the handlebar 7 and more leftward than the right end of the handlebar 7. The meter unit 29 is entirely located more rightward than the left end of the handlebar 7 and more leftward than the right end of the handlebar 7.

Part of the meter unit 29 overlaps the windscreen 27 in rear view of the vehicle.

The windscreen 27 has a left end portion not shown, and a right end portion not shown. The meter unit 29 is located more rightward than the left end portion of the windscreen 27 and more leftward than the right end portion of the windscreen 27. The meter unit 29 is entirely located more rightward than the left end portion of the windscreen 27 and more leftward than the right end portion of the windscreen 27.

The meter unit 29 is elongated in the transverse direction Y. Fig. 3 shows a length W of the meter unit 29 in the transverse direction Y. Fig. 3 shows a length H of the meter unit 29 in an up-down direction Z. The length W is larger than the length H.

The meter unit 29 is of substantially a Y-shape in rear view of the vehicle.

The meter unit 29 includes a casing 30.

The casing 30 comprises a first case 31 and a second case 32. The second case 32 is located rightward of the first case 31.

The first case 31 is located leftward of the vehicle center plane C. The first case 31 is entirely located leftward of the vehicle center plane C. The first case 31 is not located on the vehicle center plane C. That is, the first case 31 does not intersect the vehicle center plane C.

The second case 32 is located rightward of the vehicle center plane C. The second case 32 is entirely located rightward of the vehicle center plane C. The second case 32 is not located on the vehicle center plane C.

The first case 31 and the second case 32 are arranged side by side in the transverse direction Y. The first case 31 is located at a height position substantially equal to that of the second case 32.

The first case 31 has an upper end T1 and a lower end B1. The second case 32 has an upper end T2 and a lower end B2. The upper end T1 and the upper end T2 are located at substantially the same height position. The lower end B1 and the lower end B2 are located at substantially the same height position.

The first case 31 and the second case 32 are located symmetrically with respect to the vehicle center plane C. The first case 31 and the second case 32 are symmetric in shape with respect to the vehicle center plane C.

The first case 31 and the second case 32 are spaced apart from each other. The first case 31 and the second case 32 are not in direct contact with each other.

The first case 31 has a left end L1 and a right end R1. The second case 32 has a left end L2 and a right end R2. The left end L2 is located more rightward than the right end R1.

The meter unit 29 forms a center space S. The center space S is provided by the casing 30. Fig. 3 schematically shows the center space S in hatches.

The center space S is formed between the first case 31 and the second case 32. The center space S is located rightward of the first case 31 and leftward of the second case 32. The center space S is in contact with the first case 31 and the second case 32. The first case 31 is not present in the center space S. The second case 32 is not present in the center space S. The center space S is open upward. The center space S is located on the vehicle center plane C.

The first case 31 is located above the handlebar 7 in rear view of the vehicle. The first case 31 does not overlap the handlebar 7 in rear view of the vehicle. The second case 32 is located above the handlebar 7 in rear view of the vehicle. The second case 32 does not overlap the handlebar 7 in rear view of the vehicle.

Part of the first case 31 overlaps the windscreen 27 in rear view of the vehicle. Part of the second case 32 overlaps the windscreen 27 in rear view of the vehicle.

The casing 30 includes a third case 33. The third case 33 is connected to the first case 31 and the second case 32. The first case 31 is indirectly connected to the second case 32 via the third case 33. The first case 31 and the second case 32 are not directly connected to each other.

The third case 33 is connected to a right lower portion of the first case 31 and a left lower portion of the second case 32. The third case 33 extends downward from the first case 31 and the second case 32. The center space S is located above the third case 33. The center space S is in contact with the third case 33. The third case 33 is not present in the center space S.

The third case 33 is located on the vehicle center plane C.

The third case 33 has an upper end T3 and a lower end B3. The upper end T3 is located lower than the upper end T1 and the upper end T2. The upper end T3 is located higher than the lower end B1 and the lower end B2. The lower end B3 is located lower than the lower end B1 and the lower end B2.

The third case 33 has a left end L3 and a right end R3. The left end L3 is located more rightward than the left end L1 and more leftward than the right end R1. The right end R3 is located more rightward than the left end L2 and more leftward than the right end R2.

The third case 33 overlaps the handlebar 7 in rear view of the vehicle. Part of the third case 33 overlaps the handlebar 7 in rear view of the vehicle.

The first case 31 has a rear face 31R. The rear face 31R is illustrated in Fig. 3.

The first case 31 has openings 34 and 35. The openings 34 and 35 are formed in the rear face 31R. The openings 34 and 35 open an interior of the first case 31 rearward. The opening 35 is located above the opening 34. The opening 35 is smaller than the opening 34.

The second case 32 has a rear face 32R. The rear face 32R appears in Fig. 3.

The second case 32 has openings 36 and 37. The openings 36 and 37 are formed in the rear face 32R. The openings 36 and 37 open an interior of the second case 32 rearward. The opening 37 is located above the opening 36. The opening 37 is smaller than the opening 36.

The meter unit 29 may comprise or include a plurality of clear covers. The clear covers are attached to the openings 34, 35, 36, and 37 individually. The clear covers cover the openings 34, 35, 36, and 37 individually. The clear covers are each transparent.

The third case 33 has a rear face 33R. The rear face 33R appears in Fig. 3. The third case 33 has no opening formed in the rear face 33R. An interior of the third case 33 is not opened rearward.

The meter unit 29 comprises a first eaves part 38. The first eaves part 38 is connected to the first case 31. The first eaves part 38 is located above the opening 34. The first eaves part 38 is located below the opening 35. The first eaves part 38 extends in the transverse direction Y in rear view of the vehicle. The first eaves part 38 is located leftward of the vehicle center plane C.

The meter unit 29 comprises a second eaves part 39. The second eaves part 39 is connected to the second case 32. The second eaves part 39 is located above the opening 36. The second eaves part 39 is located below the opening 37. The second eaves part 39 extends in the transverse direction Y in rear view of the vehicle. The second eaves part 39 is located rightward of the vehicle center plane C.

Reference is made to Fig. 2. The first eaves part 38 is connected to the rear face 31R of the first case 31. The first eaves part 38 extends rearward from rear face 31R of the first case 31. More specifically, the rear face 31R extends forward and upward. The first eaves part 38 extends rearward and upward from rear face 31R. The second eaves part 39 is connected to the rear face 32R of the second case 32, which illustration is omitted. The second eaves part 39 extends rearward from rear face 32R of the second case 32.

The first case 31, the second case 32, the third case 33, the first eaves part 38, and the second eaves part 39 each have light-blocking property. That is, the first case 31, the second case 32, the third case 33, the first eaves part 38, and the second eaves part 39 each transmit no light. The first case 31, the second case 32, the third case 33, the first eaves part 38, and the second eaves part 39 are each not transparent.

For example, the first case 31, the second case 32, and the third case 33, the first eaves part 38, and the second eaves part 39 are formed integrally.

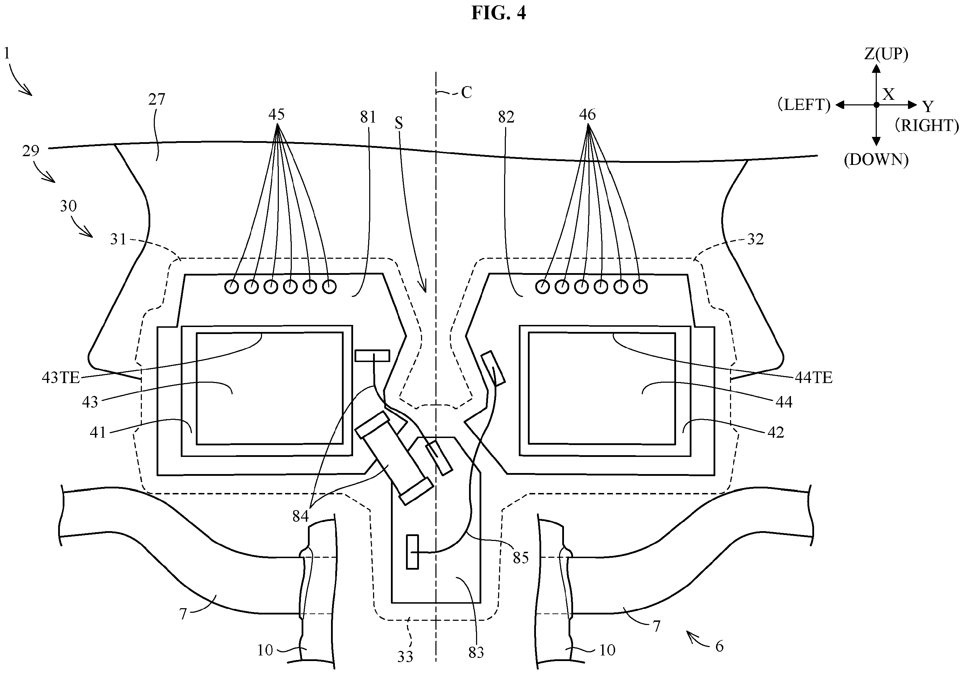

Fig. 4 is a rear view of the front portion of the straddled vehicle 1 seen from rearward. Fig. 4 illustrates the first case 31, the second case 32, and the third case 33 by dotted lines.

The meter unit 29 comprises a first display 41 and a second display 42. The first display 41 is accommodated in the first case 31. The first display 41 is entirely accommodated in the first case 31. The second display 42 is accommodated in the second case 32. The second display 42 is entirely accommodated in the second case 32.

The first display 41 and the second display 42 are each, for example, a flat panel display. The first display 41 and the second display 42 are each, for example, any of a liquid crystal display, a plasma display, and an organic electro luminescence display. The first display 41 and the second display 42 are each, for example, a TFT liquid crystal display. The first display 41 and the second display 42 each include, for example, a liquid crystal board and a plurality of thin-film transistors (TFTs) arranged on the liquid crystal board. The first display 41 is not a so-called analog-type instrument. The second display 42 is not a so-called analog-type instrument.

The first display 41 has a thin plate shape. The second display 42 has a thin plate shape.

The second display 42 is located rightward of the first display 41.

The first display 41 is located leftward of the vehicle center plane C. The first display 41 is entirely located leftward of the vehicle center plane C. The first display 41 is not located on the vehicle center plane C.

The second display 42 is located rightward of the vehicle center plane C. The second display 42 is entirely located rightward of the vehicle center plane C. The second display 42 is not located on the vehicle center plane C.

The first display 41 and the second display 42 are arranged side by side in the transverse direction Y. The first display 41 is located at a height position substantially equal to that of the second display 42.

The first display 41 and the second display 42 are positioned symmetrically with respect to the vehicle center plane C.

The first display 41 and the second display 42 are symmetric in shape with respect to the vehicle center plane C. The first display 41 is a rectangle elongated in the transverse direction Y. The second display 42 is a rectangle elongated in the transverse direction Y.

The first display 41 and the second display 42 are spaced apart from each other. The first display 41 and the second display 42 are not in direct contact with each other.

The center space S is located between the first display 41 and the second display 42. The center space S is located rightward of the first display 41 and leftward of the second display 42.

The first display 41 comprises a first screen 43. The second display 42 includes a second screen 44.

The first screen 43 is formed on a surface of the first display 41. The first screen 43 has a flat planar shape, for example. The second screen 44 is formed on a surface of the second display 42. The second screen 44 has a flat planar shape, for example.

The first screen 43 displays an image. The second screen 44 displays an image.

The first screen 43 and the second screen 44 each display images with a dot matrix method. For example, the first screen 43 includes a plurality of dots not shown. The dots are arranged on the first screen 43 in a grid pattern. The dot is also called a pixel. Luminance of the dots is variable individually. For example, when the first display 41 is a TFT liquid crystal display, thin-film transistors are each arranged on the dots. The thin-film transistors change luminance of the dots individually. The second screen 44 is configured in the same manner as the first screen 43.

The first screen 43 and the second screen 44 each display color images, for example.

The second screen 44 is located rightward of the first screen 43.

The first screen 43 is located leftward of the vehicle center plane C. The first screen 43 is entirely located leftward of the vehicle center plane C. The first screen 43 is not located on the vehicle center plane C.

The second screen 44 is located rightward of the vehicle center plane C. The second screen 44 is entirely located rightward of the vehicle center plane C. The second screen 44 is not located on the vehicle center plane C.

The first screen 43 and the second screen 44 are arranged side by side in the transverse direction Y in rear view of the vehicle. The first screen 43 is located at a height position substantially equal to that of the second screen 44.

The first screen 43 and the second screen 44 are positioned symmetrically with respect to the vehicle center plane C.

The first screen 43 and the second screen 44 are symmetric in shape with respect to the vehicle center plane C. The second screen 44 is substantially equal to the first screen 43 in size. The area of the second screen 44 is substantially equal to the area of the first screen 43.

The first screen 43 is a rectangle elongated in the transverse direction Y. The second screen 44 is a rectangle elongated in the transverse direction Y. The length of the first screen 43 in the transverse direction Y is larger than the length of the first screen 43 in the up-down direction Z. The length of the second screen 44 in the transverse direction Y is larger than the length of the second screen 44 in the up-down direction Z.

The first screen 43 and the second screen 44 are spaced apart from each other. The first screen 43 and the second screen 44 are not in direct contact with each other.

The center space S is located between the first screen 43 and the second screen 44. The center space S is located rightward of the first screen 43 and leftward of the second screen 44.

The first screen 43 has an upper edge 43TE. The second screen 44 has an upper edge 44TE. The upper edge 43TE and the upper edge 44TE are located at substantially the same height position. The center space S extends from a position lower than the upper edge 43TE to a position higher than the upper edge 43TE. The center space S extends from a position lower than the upper edge 44TE to a position higher than the upper edge 44TE.

The meter unit 29 comprises a plurality of (e.g., six) first indicators 45 and a plurality of (e.g., six) second indicators 46.

All the first indicators 45 are accommodated in the first case 31. All the second indicators 46 are accommodated in the second case 32.

The first indicators 45 and the second indicators 46 are each turned on and off. The first indicators 45 and the second indicators 46 each have a light source not shown. The light source is, for example, an electric bulb.

The first indicators 45 and the second indicators 46 each give information on operation of devices provided in the straddled vehicle 1, for example. The first indicators 45 and the second indicators 46 each give information on conditions of devices provided in the straddled vehicle 1, for example. When the left direction indicator 26L actuates, one of the first indicators 45 is turned on, for example.

The first indicators 45 are each located above the first screen 43 in rear view of the vehicle. The first screen 43 is entirely located lower than any of the first indicators 45. The second indicators 46 are each located above the second screen 44 in rear view of the vehicle. The second screen 44 is entirely located lower than any of the second indicators 46.

The first indicators 45 are each smaller in area than the first screen 43. The second indicators 46 are each smaller in area than the second screen 44.

The second indicators 46 are located rightward of the first indicators 45.

The first indicators 45 are each located leftward of the vehicle center plane C. None of the first indicators 45 is located rightward of the vehicle center plane C. The second indicators 46 are each located rightward of the vehicle center plane C. None of the second indicators 46 is located leftward of the vehicle center plane C.

The first indicators 45 are arranged side by side in the transverse direction Y. The first indicators 45 are each located at substantially the same height position. The first indicators 45 are arranged in a substantially horizontal direction in rear view of the vehicle.

The second indicators 46 are arranged side by side in the transverse direction Y. The second indicators 46 are located at substantially the same height position. The second indicators 46 are arranged in a substantially horizontal direction in rear view of the vehicle.

The first indicators 45 and the second indicators 46 are positioned symmetrically with respect to the vehicle center plane C. The first indicators 45 are located at substantially the same height position as that of the second indicators 46.

Reference is made to Fig. 3. The first screen 43 entirely overlaps the opening 34 in rear view of the vehicle. The first screen 43 is visible through the opening 34 in rear view of the vehicle. The first screen 43 is entirely visible through the opening 34 in rear view of the vehicle.

The first indicators 45 entirely overlap the opening 35 in rear view of the vehicle. The first indicators 45 are visible through the opening 35 in rear view of the vehicle.

The first screen 43 is located below the first eaves part 38 in rear view of the vehicle. The first screen 43 is entirely located below the first eaves part 38 in rear view of the vehicle.

The first eaves part 38 extends from a position more leftward than the first screen 43 to a position more rightward than the first screen 43.

The first indicators 45 are each located above the first eaves part 38 in rear view of the vehicle. The first eaves part 38 is entirely located higher than any of the first indicators 45.

The first eaves part 38 extends from a position more leftward than any of the first indicators 45 to a position more rightward than any of the first indicators 45.

The second screen 44 entirely overlaps the opening 36 in rear view of the vehicle. The second screen 44 is visible through the opening 36 in rear view of the vehicle. The second screen 44 is entirely visible through the opening 36 in rear view of the vehicle.

The second indicators 46 entirely overlap the opening 37 in rear view of the vehicle. The second indicators 46 are visible through the opening 37 in rear view of the vehicle.

The second screen 44 is located below the second eaves part 39 in rear view of the vehicle. The second screen 44 is entirely located below the second eaves part 39 in rear view of the vehicle.

The second eaves part 39 extends from a position more leftward than the second screen 44 to a position more rightward than the second screen 44.

The second indicators 46 are each located above the second eaves part 39 in rear view of the vehicle. The second eaves part 39 is entirely located lower than any of the second indicators 46.

The second eaves part 39 extends from a position more leftward than any of the second indicators 46 to a position more rightward than any of the second indicators 46.

Reference is made to Fig. 2. Fig. 2 shows the first display 41 and the first screen 43 by dotted lines. As described above, the first screen 43 is formed on the surface of the first display 41. For example, the first screen 43 is formed on a rear face of the first display 41.

The first screen 43 is inclined forward and upward. The first screen 43 extends forward and upward.

The first screen 43 is inclined at an angle of 45 degrees or more relative to a horizontal plane G. In the present specification, an angle defined by the first screen 43 and the horizontal plane G is called a first angle θ1. The first angle θ1 is 45 degrees or more.

Fig. 2 schematically illustrates an imaginary plane K containing the first screen 43. The first angle θ1 corresponds to an angle defined by the plane K and the horizontal plane G.

The first angle θ1 is less than 90 degrees.

The first angle θ1 is preferably 60 degrees or more and 75 degrees or less. The first angle θ1 is preferably 65 degrees or more and 70 degrees or less.

Fig. 2 schematically illustrates incident light E1 incident on the first screen 43 and reflected light E2 reflected from the first screen 43. The incident light E1 is, for example, sunlight. The incident light E1 travels forward and downward to the first screen 43. The reflected light E2 is light generated by reflection of the incident light E1 on the first screen 43. The reflected light E2 travels rearward and downward from the first screen 43. The reflected light E2 does not travel toward the driver P. The reflected light E2 does not travel toward the head PH of the driver P. Accordingly, the sun or other objects are hard to be reflected on the first screen 43. In other words, reflection of the sun or other objects by the first screen 43 toward the driver P can be suppressed. In the present specification, the reflection of the sun or other objects toward the driver P by the first screen 43 is called "glare on the first screen 43". Since the first angle θ1 is 45 degrees or more, the glare on the first screen 43 can suitably be suppressed.

The first eaves part 38 shields light. Accordingly, the first eaves part 38 can suppress the glare on the first screen 43 more.

Moreover, the first eaves part 38 shields light traveling from the first screen 43 to the windscreen 27. Accordingly, the first eaves part 38 prevents the first screen 43 from being reflected on the windscreen 27. As a result, the first eaves part 38 can suppress reflection of the first screen 43 by the windscreen 27 toward the driver P.

If the meter unit 29 does not comprise or include the first eaves part 38, incident light F1 and reflected light F2 shown in Fig. 2 may be generated. The incident light F1 is light travelling from the first screen 43 to the windscreen 27. The incident light F1 travels upward from the first screen 43. The incident light F1 enters into the windscreen 27. The reflected light F2 is light generated by reflection of the incident light F1 on the windscreen 27. The reflected light F2 travels rearward from the windscreen 27. The reflected light F2 travels toward the head PH of the driver P. When the reflected light F2 is generated, the driver P sees that the first screen 43 is superimposed on the windscreen 27. Accordingly, forward visibility for the driver P with respect to the straddled vehicle 1 is reduced.

In this embodiment, the first eaves part 38 shields the incident light F1. The first eaves part 38 prevents the incident light F1 from reaching the windscreen 27. As a result, the first eaves part 38 can suppress generation of the reflected light F2 suitably. Consequently, the forward visibility for the driver P with respect to the straddled vehicle 1 can be obtained suitably.

Similar to the first screen 43, the first display 41 is inclined forward and upward. The first display 41 is inclined at an angle of 45 degrees or more relative to the horizontal plane G. An angle defined by the first display 41 and the horizontal plane G is substantially equal to the first angle θ1.

The second screen 44 is inclined forward and upward, which illustration is omitted. The second screen 44 extends forward and upward. The second screen 44 is inclined at an angle of 45 degrees or more relative to the horizontal plane G.

Here, an angle defined by the second screen 44 and the horizontal plane G is called a second angle.

The second angle is less than 90 degrees.

The second angle is preferably 60 degrees or more and 75 degrees or less. The second angle is preferably 65 degrees or more and 70 degrees or less.

Since the second angle is 45 degrees or more, glare on the second screen 44 can suitably be suppressed. Here, "glare on the second screen 44" corresponds to reflection of the sun or other objects toward the driver P by the second screen 44.

The second eaves part 39 can suppress the glare on the second screen 44 more. Moreover, the second eaves part 39 prevents the second screen 44 from being reflected on the windscreen 27.

Similar to the second screen 44, the second display 42 is inclined forward and upward. The second display 42 is inclined at an angle of 45 degrees or more relative to the horizontal plane G. An angle defined by the second display 42 and the horizontal plane G is substantially equal to the second angle.

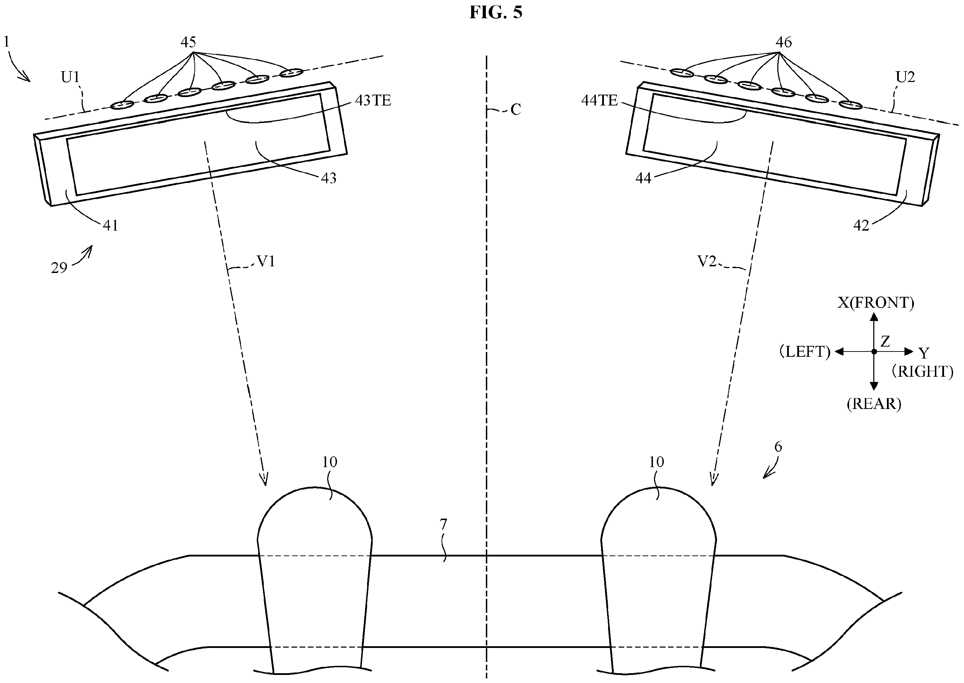

Fig. 5 is a plan view of the front portion of the straddled vehicle 1. Fig. 5 omits illustration of the first case 31, the second case 32, the third case 33, and the like.

The first screen 43 is inclined leftward and rearward in plan view of the vehicle. The first screen 43 extends leftward and rearward in plan view of the vehicle. The second screen 44 is inclined rightward and rearward in plan view of the vehicle. The second screen 44 extends rightward and rearward in plan view of the vehicle.

The upper edge 43TE of the first screen 43 is inclined leftward and rearward in plan view of the vehicle. The upper edge 44TE of the second screen 44 is inclined rightward and rearward in plan view of the vehicle.

Fig. 5 illustrates a first perpendicular V1 and a second perpendicular V2. The first perpendicular V1 is an imaginary line passing and perpendicular with respect to the first screen 43. The second perpendicular V2 is an imaginary line passing and perpendicular with respect to the second screen 44. The first perpendicular V1 extends rearward and rightward in plan view of the vehicle. The second perpendicular V2 extends rearward and leftward in plan view of the vehicle.

Similar to the first screen 43, the first display 41 is inclined leftward and rearward in plan view of the vehicle. Similar to the second screen 44, the second display 42 is inclined rightward and rearward in plan view of the vehicle.

The first indicators 45 are lined up in a row in a leftward and rearward direction. The first indicators 45 are lined up in the leftward and rearward direction in the plan view of the vehicle. The second indicators 46 are lined up in a row in a rightward and rearward direction. The second indicators 46 are lined up in the rightward and rearward in the plan view of the vehicle.

Fig. 5 shows imaginary straight lines U1 and U2. The first indicators 45 are lined up on the straight line U1. The second indicators 46 are lined up on the straight line U2. The straight line U1 is inclined leftward and rearward in plan view of the vehicle. The straight line U2 is inclined rightward and rearward in plan view of the vehicle.

The direction where the first indicators 45 are lined up in a row is substantially the same as the direction where the first screen 43 is inclined in the plan view of the vehicle. In other words, the straight line U1 is substantially parallel to the upper edge 43TE of the first screen 43. The direction where the second indicators 46 are lined up in a row is substantially the same as the direction where the second screen 44 is inclined in the plan view of the vehicle. In other words, the straight line U2 is substantially parallel to the upper edge 44TE of the second screen 44.

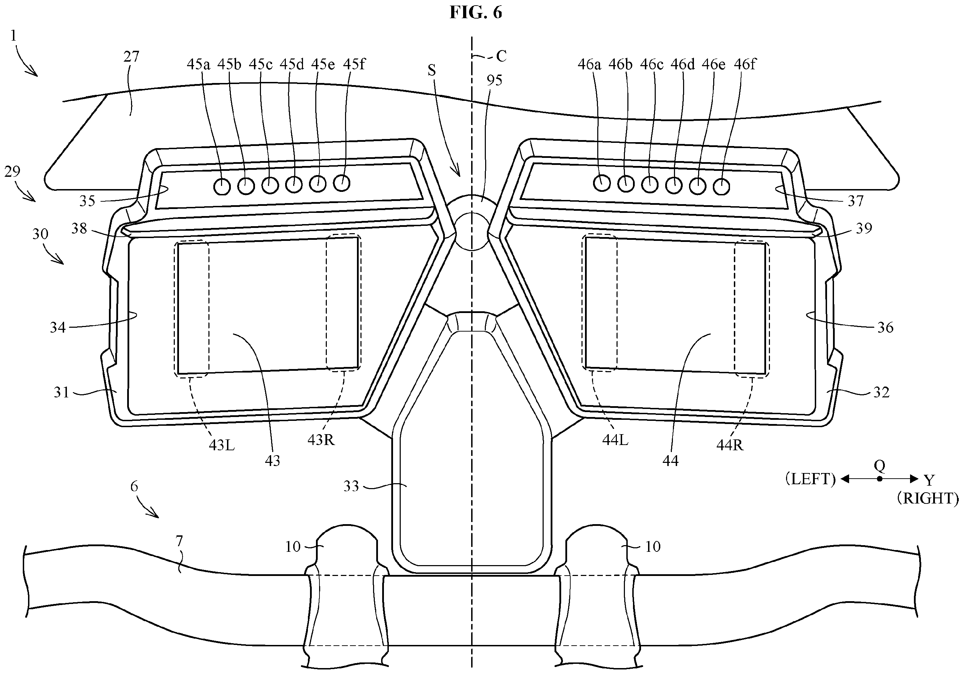

Fig. 6 is a perspective view seen from a direction Q in Fig. 1. Here, the direction Q corresponds to a line of sight of the driver P when the driver P sees the meter unit 29. Accordingly, Fig. 6 shows the meter unit 29 seen from the driver P.

The head PH of the driver P is generally positioned more rearward than the meter unit 29. The head PH of the driver P is generally positioned higher than the meter unit 29. The head PH of the driver P is generally positioned on the vehicle center plane C. Accordingly, the first screen 43 is directed to the head PH of the driver P. The second screen 44 is directed to the head PH.

The first screen 43 has a left end portion 43L and a right end portion 43R. Fig. 6 schematically shows the left end portion 43L and the right end portion 43R by dotted lines. Both the left end portion 43L and the right end portion 43R are directed to the head PH. Accordingly, the first screen 43 is entirely directed to the head PH of the driver P.

The second screen 44 has a left end portion 44L and a right end portion 44R. Fig. 6 schematically shows the left end portion 44L and the right end portion 44R by dotted lines. Both the left end portion 44L and the right end portion 44R are directed to the head PH. Accordingly, the second screen 44 is entirely directed to the head PH of the driver P.

The first screen 43 faces the head PH. The second screen 44 faces the head PH.

Both the left end portion 43L and the right end portion 43R face the head PH. Accordingly, the first screen 43 entirely faces the head PH of the driver P. Both the left end portion 44L and the right end portion 44R face the head PH. Accordingly, the second screen 44 entirely faces the head PH of the driver P.

The first indicators 45 are each directed to the head PH. The second indicators 46 are directed to the head PH.

When the first indicators 45 are distinguished, they are described as first indicators 45a, 45b, 45c, 45d, 45e, and 45f. The first indicator 45a is located most leftward among the first indicators 45. The first indicator 45f is located most rightward among the first indicators 45. The first indicator 45a and the first indicator 45f both face the head PH. Accordingly, the first indicators 45b to 45e are directed to the head PH.

When the second indicators 46 are distinguished, they are described as second indicators 46a, 46b, 46c, 46d, 46e, and 46f. The second indicator 46a is located most leftward among the second indicators 46. The second indicator 46f is located most rightward among the second indicators 46. The second indicator 46a and the second indicator 46f both face the head PH. Accordingly, the second indicators 46b to 46e are directed to the head PH.

The first indicators 45 each face the head PH. The second indicators 46 each face the head PH.

The first indicator 45a and the first indicator 45f both face the head PH. Accordingly, the first indicators 45b to 45e face the head PH. The second indicator 46a and the second indicator 46f both face the head PH. Accordingly, the second indicators 46b to 46e face the head PH.

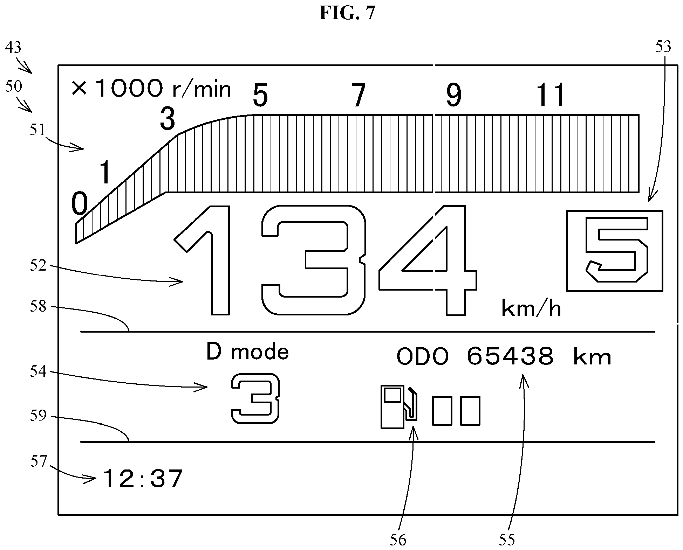

FIG. 7 is one example of images displayed on the first screen 43. FIG. 7 shows the first screen 43 seen from a direction along the first perpendicular V1. In the present specification, images displayed on the first screen 43 are collectively referred to as a first image 50.

The first image 50 represents a plurality of display contents.

The first image 50 comprises a plurality of (e.g., seven) images 51 to 57. In order to distinguish the first image 50 from the images 51 to 57 included in the first image 50 more clearly, the images 51-57 are referred to as pictures 51-57. The pictures 51 to 57 each indicate different display contents. The picture 51 indicates a rotation speed of the engine 13. The picture 52 indicates a speed of the straddled vehicle 1. The picture 53 indicates the gear position. The picture 54 indicates a driving mode. The picture 55 indicates a traveling distance of the straddled vehicle 1. The picture 56 indicates an amount of fuel stored in the fuel tank 15. The picture 57 indicates time.

The picture 51 corresponds to one example of the third image in the present invention. The picture 52 corresponds to one example of the fourth image in the present invention.

The first image 50 comprises images (pictures) 58 and 59. The picture 58 indicates a boundary between the pictures 51 to 53 and the pictures 54 to 56. The picture 59 indicates a boundary between the pictures 54 to 56 and the picture 57.

The pictures 58 and 59 are each a line extending substantially horizontally. The picture 59 is located lower than the picture 58. The pictures 58 and 59 define a first region, a second region, and a third region. The pictures 58 and 59 divide the first screen 43 into the first region, the second region, and the third region. The first region is positioned higher than the picture 58. The second region is positioned lower than the picture 58 and higher than the picture 59. The third region is positioned lower than the picture 59. The pictures 51 to 53 are located in the first region. All the pictures 51 to 53 are located in the first region. The pictures 54 to 56 are located in the second region. All the pictures 54 to 56 are located in the second region. The picture 57 is located in the third region. The picture 57 is entirely located in the third region.

As described above, the display contents indicated on the first image 50 concern typical conditions of the straddled vehicle 1. The display contents indicated on the first image 50 are always used by the driver P. The driver P drives the straddled vehicle 1 while confirming the display contents indicated on the first image 50.

In this embodiment, the display contents indicated on the first image 50 are always unchangeable. The pictures 51 to 59 are always contained in the first image 50. The pictures 51 to 59 are always displayed. The driver P cannot change the display contents indicated on the first image 50.

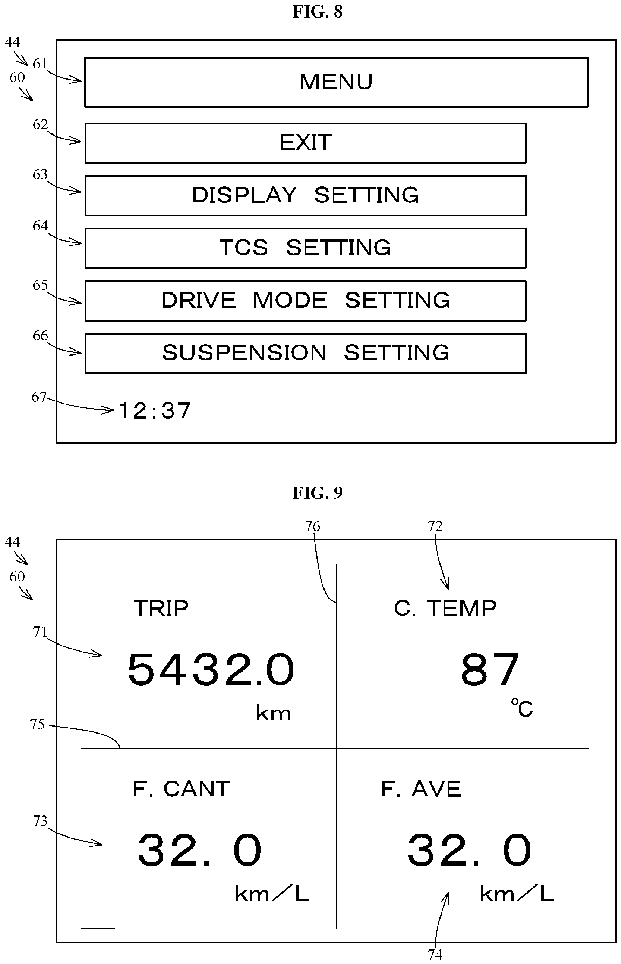

FIG. 8 is one example of images displayed on the second screen 44. FIG. 8 shows the second screen 44 seen from a direction along the second perpendicular V2. In the present specification, images displayed on the second screen 44 are collectively referred to as a second image 60.

The second image 60 represents a plurality of display contents.

The second image 60 comprises a plurality of (e.g., seven) images 61 to 67. In order to distinguish the second image 60 from the images 61 to 67 included in the second image 60 more clearly, the images 61-67 are referred to as pictures 61-67. The pictures 61 to 67 each indicate different display contents. The pictures 61 to 66 each indicate setting items that the driver P can set. The picture 67 indicates time.

The pictures 61 to 66 each comprise a rectangular contour. The contours of the pictures 61 to 66 represent boundaries among the pictures 61 to 66.

FIG. 9 is another example of images displayed on the second screen 44. FIG. 9 shows the second screen 44 seen from the direction along the second perpendicular V2.

The second image 60 comprises a plurality of (e.g., four) images 71 to 74. In order to distinguish the second image 60 from the images 71 to 74 included in the second image 60, the images 71-74 are referred to as pictures 71-74. In Fig. 9, the second image 60 does not include the pictures 61 to 67. That is, in Fig. 9, the second screen 44 does not display the pictures 61 to 67. The pictures 71 to 74 each indicate different display contents. The picture 71 indicates a traveling distance of the straddled vehicle 1. The picture 72 indicates a temperature of the coolant of the engine 13. The picture 73 indicates instantaneous fuel consumption. The picture 74 indicates average fuel consumption.

The second image 60 comprises images (pictures) 75 and 76. The pictures 75 and 76 indicate boundaries among the pictures 71 to 74.

The picture 75 is a line extending substantially horizontally. The picture 76 is a line orthogonal with respect to the picture 75. The pictures 75 and 76 define four regions. The pictures 75 and 76 divide the second screen 44 into the four regions. The pictures 71 to 74 are located at different regions.

As described above, the display contents displayed on the second image 60 concern setting of devices in the straddled vehicle 1, for example. The display contents displayed on the second image 60 correspond to specific information designated by the driver P, for example.

In this embodiment, the display contents indicated on the second image 60 are changeable. For example, the picture 61 may or may not be contained in the second image 60. The pictures 62 to 67 and 71 to 76 are like the picture 61. The pictures 61 to 67 and 71 to 76 are each switchable between display state and non-display state. The driver P can change the display contents indicated on the second image 60.

The second image 60 does not contain a picture that indicates the rotation speed of the engine 13. The second image 60 does not contain a picture that indicates the speed of the straddled vehicle 1. The second screen 44 does not display a picture that indicates the rotation speed of the engine 13. The second screen 44 does not display a picture that indicates the speed of the straddled vehicle 1.

Reference is made to Fig. 4. The meter unit 29 includes a first drive board 81, a second drive board 82, and a third drive board 83. The first drive board 81 is accommodated in the first case 31. The first drive board 81 is entirely accommodated in the first case 31. The second drive board 82 is accommodated in the second case 32. The second drive board 82 is entirely accommodated in the second case 32. The third drive board 83 is accommodated in the third case 33. The third drive board 83 is entirely accommodated in the third case 33.

The first drive board 81, the second drive board 82, and the third drive board 83 are spaced apart from one another. The first drive board 81, the second drive board 82, and the third drive board 83 are not in direct contact with one another.

The first drive board 81 has a thin plate shape. The second drive board 82 has a thin plate shape. The third drive board 83 has a thin plate shape.

The first drive board 81, the second drive board 82, and the third drive board 83 entirely drive the first display 41 and the second display 42. The first drive board 81, the second drive board 82, and the third drive board 83 entirely cause the first screen 43 to display the first image 50, and cause the second screen 44 to display the second image 60.

The first drive board 81 further drives the first indicators 45. The first drive board 81 turns on and off the first indicators 45. The second drive board 82 further drives the second indicators 46. The second drive board 82 turns on and off the second indicators 46.

The first drive board 81 is located in front of the first display 41. The second drive board 82 is located in front of the second display 42.

The first drive board 81 overlaps at least part of the first display 41 in rear view of the vehicle. The second drive board 82 overlaps at least part of the second display 42 in rear view of the vehicle.

For example, the first drive board 81 overlaps the entire of the first display 41 in rear view of the vehicle. For example, the second drive board 82 overlaps the entire of the second display 42 in rear view of the vehicle.

The first drive board 81 is located in front of the first screen 43. The second drive board 82 is located in front of the second screen 44.

The first drive board 81 overlaps at least part of the first screen 43 in rear view of the vehicle. The second drive board 82 overlaps at least part of the second screen 44 in rear view of the vehicle. At least part of the first drive board 81 overlaps at least part of the first screen 43 in rear view of the vehicle. At least part of the second drive board 82 overlaps at least part of the second screen 44 in rear view of the vehicle.

For example, the first drive board 81 overlaps the entire of the first screen 43 in rear view of the vehicle. For example, the second drive board 82 overlaps the entire of the second screen 44 in rear view of the vehicle.

The first drive board 81 is located in front of the first indicators 45. The second drive board 82 is located in front of the second indicators 46.

The first drive board 81 overlaps each of the first indicators 45 in rear view of the vehicle. The second drive board 82 overlaps each of the second indicators 46 in rear view of the vehicle.

The third drive board 83 does not overlap the first display 41 in rear view of the vehicle. The third drive board 83 does not overlap the second display 42 in rear view of the vehicle.

The third drive board 83 does not overlap the first screen 43 in rear view of the vehicle. The third drive board 83 does not overlap the second screen 44 in rear view of the vehicle.

The third drive board 83 does not overlap the first indicators 45 in rear view of the vehicle. The third drive board 83 does not overlap the second indicators 46 in rear view of the vehicle.

The first drive board 81, the second drive board 82, and the third drive board 83 are connected to one another electrically.

The meter unit 29 includes a first electric wire 84 and a second electric wire 85. The first electric wire 84 connects the first drive board 81 to the third drive board 83 electrically. The second electric wire 85 connects the second drive board 82 to the third drive board 83 electrically. The first electric wire 84 includes, for example, at least either a cord or a flexible flat cable. The second electric wire 85 includes, for example, at least either a cord or a flexible flat cable.

The first drive board 81 is connected to the first display 41 electrically. The first drive board 81 is connected to the first indicators 45 electrically.

The second drive board 82 is connected to the second display 42 electrically. The second drive board 82 is connected to the second indicators 46 electrically.

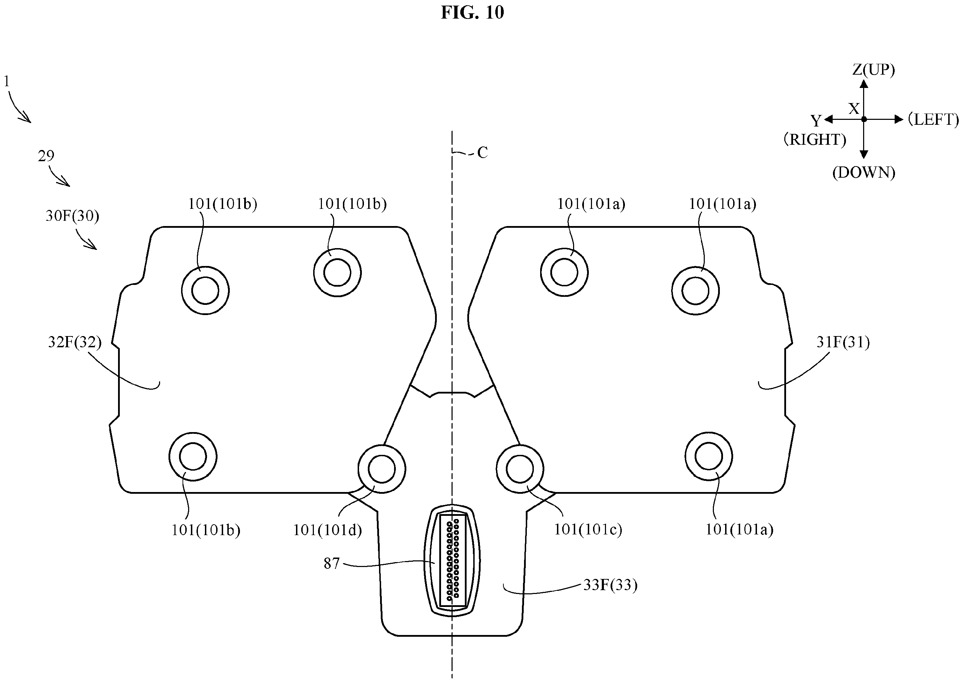

Fig. 10 is a front view of the meter unit 29 seen from forward. The third case 33 has a front face 33F. The front face 33F appears in Fig. 10. The driver P riding the straddled vehicle 1 cannot see the front face 33F. The front face 33F does not appear in Figs. 3 and 6.

The third case 33 comprises an insertion port 87. The insertion port 87 is located in the front face 33F. The insertion port 87 is electrically connected to the first drive board 81, the second drive board 82, and the third drive board 83.

Reference is made to Fig. 2. The straddled vehicle 1 includes a cable connector 91. The cable connector 91 is connected to the insertion port 87. The insertion port 87 is connectable to the cable connector 91. The insertion port 87 is detachable from the cable connector 91.

The straddled vehicle 1 comprises a cable 92. The cable 92 is connected to the cable connector 91. The cable 92 extends downward and forward from the cable connector 91.

The cable 92 transmits information (e.g., data) to the meter unit 29. Moreover, the cable 92 supplies power to the meter unit 29.

The straddled vehicle 1 has an ECU not shown. Here, the term ECU is an abbreviation of an engine control unit. The cable 92 is connected to the ECU, for example. The cable 92 transmits information between the meter unit 29 and the ECU. The meter unit 29 and the ECU can communicate with each other via the cable 92.

### 3. Configuration for supporting meter unit 29

Reference is made to Fig. 2. The straddled vehicle 1 includes a bracket 95. The bracket 95 supports the meter unit 29. The bracket 95 is located in front of the meter unit 29. The bracket 95 is made of synthetic resin.

The straddled vehicle 1 includes a stay 97. The stay 97 is located in front of the bracket 95. The stay 97 supports the bracket 95. The stay 97 is made of metal.

The stay 97 is supported by the head tube 4.

The stay 97 extends in the up-down direction Z. A length of the stay 97 in the up-down direction Z is relatively large. The stay 97 has a lower portion 97a and an upper portion 97b. The lower portion 97a is connected to the head tube 4. The upper portion 97b is connected to the bracket 95.

Reference is made to Fig. 10. The straddled vehicle 1 includes a plurality of (e.g., eight) first elastic bodies 101. The first elastic bodies 101 are attached to the casing 30. The material of the first elastic bodies 101 is, for example, rubber or resin.

The casing 30 has a front face 30F. The front face 30F appears in Fig. 10. The first elastic bodies 101 are attached to the front face 30F.

The first case 31 has a front face 31F. The second case 32 has a front face 32F. The front faces 31F and 32F appear in Fig. 10. The front face 30F corresponds to the entire of the front faces 31F, 32F and 33F. The first elastic bodies 101 are each attached to at least any of the front faces 31F, 32F and 33F.

For example, three first elastic bodies 101 are attached to the front face 31F. In Fig. 10, the three first elastic bodies 101 attached to the front face 31F are denoted by numeral "101a". Three first elastic bodies 101 are attached to the front face 32F. In Fig. 10, the three first elastic bodies 101 attached to the front face 32F are denoted by numeral "101b". One first elastic body 101 is attached on a boundary between the front face 31F and the front face 33F. In other words, the one first elastic body 101 is attached across the front face 31F and the front face 33F. In Fig. 10, the one first elastic body 101 attached on the boundary between the front face 31F and the front face 33F is denoted by numeral "101c". One first elastic body 101 is attached on a boundary between the front face 32F and the front face 33F. In other words, the one first elastic body 101 is attached across the front face 32F and the front face 33F. In Fig. 10, the one first elastic body 101 attached on the boundary between the front face 32F and the front face 33F is denoted by numeral "101d".

The bracket 95 supports the casing 30 via the first elastic bodies 101.

The casing 30 directly contacts the first elastic bodies 101. The bracket 95 directly contacts the first elastic bodies 101. The casing 30 and the bracket 95 are not in direct contact with each other.

For example, the first elastic body 101 has an annular shape. The first elastic body 101 is, for example, a grommet or a bushing. The first elastic body 101 has an inner circumference face and an outer circumference face. One of the casing 30 and the bracket 95 directly contacts the inner circumference face of the first elastic bodies 101. The other of the casing 30 and the bracket 95 directly contacts the outer circumference face of the first elastic bodies 101. The casing 30 and the bracket 95 are connected indirectly to each other via the first elastic bodies 101.

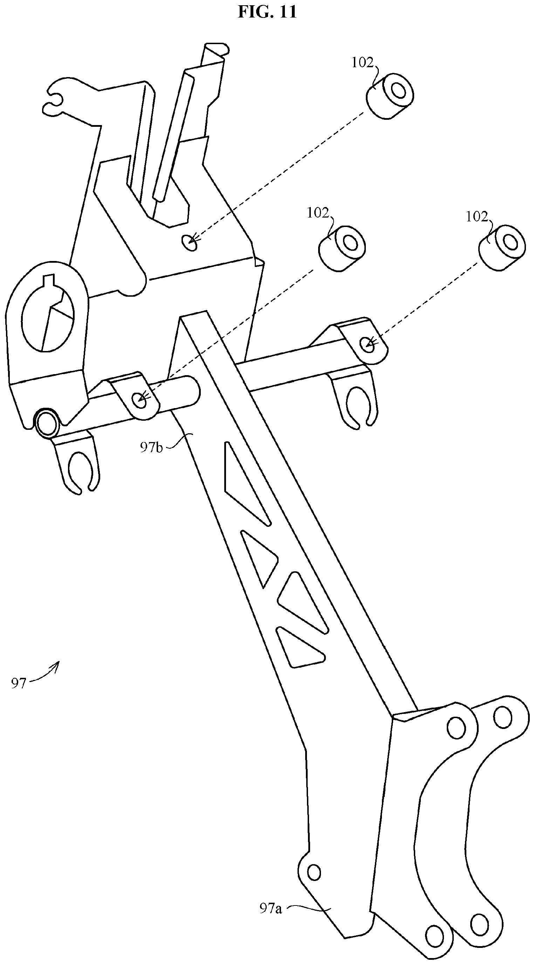

Fig. 11 is a perspective view of the stay 97 and second elastic bodies 102. The straddled vehicle 1 includes a plurality of (e.g., three) second elastic bodies 102. The number of the second elastic bodies 102 is smaller than the number of the first elastic bodies 101. The second elastic bodies 102 are attached to the bracket 95. The material of the second elastic bodies 102 is, for example, rubber or resin.

The stay 97 supports the bracket 95 via the second elastic bodies 102.

The upper portion 97b of the stay 97 is connected to the second elastic bodies 102. The upper portion 97b of the stay 97 supports the bracket 95 via the second elastic bodies 102.

The stay 97 directly contacts the second elastic bodies 102. The bracket 95 directly contacts the second elastic bodies 102. The stay 97 and the bracket 95 are not in direct contact with each other.

For example, the second elastic body 102 has an annular shape. The second elastic body 102 is, for example, a grommet or a bushing. The second elastic body 102 has an inner circumference face and an outer circumference face. One of the bracket 95 and the stay 97 directly contacts the inner circumference face of the second elastic bodies 102. The other of the bracket 95 and the stay 97 directly contacts the outer circumference face of the second elastic bodies 102. The bracket 95 and the stay 97 are connected indirectly to each other via the second elastic bodies 102.

### 4. Advantageous Effects

The straddled vehicle 1 includes the meter unit 29. The meter unit 29 is provided with the first display 41 and the second display 42. The first display 41 includes the first screen 43. The first screen 43 displays the first image 50. The second display 42 includes the second screen 44. The second screen 44 displays the second image 60. Consequently, an unclear boundary between the first image 50 and the second image 60 can be suitably suppressed.

The second screen 44 is substantially equal to the first screen 43 in size. Accordingly, the number of display contents indicated on the first screen 43 can be suitably suppressed and the number of display contents indicated on the second screen 44 can be suitably suppressed. This can suppress the number of pictures 51 to 59 contained in the first image 50. Consequently, the pictures 51 to 59 contained in the first image 50 can be arranged on the first screen 43 orderly. Consequently, unclear boundaries among the pictures 51 to 59 can be suppressed. As a result, the driver P can visibly recognize the first image 50 clearly. Specifically, the driver P can visibly recognize the pictures 51 to 59 contained in the first image 50 clearly. Accordingly, the driver P can easily grasp the display contents indicated by the first image 50. Likewise, the number of pictures 61 to 67 contained in the second image 60 can be suppressed. Consequently, the pictures 61 to 67 contained in the second image 60 can be arranged on the second screen 44 orderly. Consequently, unclear boundaries among the pictures 61 to 67 can be suppressed. As a result, the driver P can visibly recognize the second image 60 clearly. Specifically, the driver P can visibly recognize the pictures 61 to 67 contained in the second image 60 clearly. Accordingly, the driver P can easily grasp the display contents indicated by the second image 60. Moreover, the number of pictures 71 to 76 contained in the second image 60 can be suppressed. Consequently, the pictures 71 to 76 contained in the second image 60 can be arranged on the second screen 44 orderly. Consequently, unclear boundaries among the pictures 71 to 76 can be suppressed. As a result, the driver P can visibly recognize the second image 60 clearly. Specifically, the driver P can visibly recognize the pictures 71 to 76 contained in the second image 60 clearly. Accordingly, the driver P can easily grasp the display contents indicated by the second image 60.

The first screen 43 is located leftward of the vehicle center plane C. The second screen 44 is located rightward of the vehicle center plane C. Accordingly, the entire of the first screen 43 and the second screen 44 elongates in the transverse direction Y.

The first screen 43 is inclined forward and upward at an angle of 45 degrees or more relative to the horizontal plane G. Accordingly, the glare on the first screen 43 can be suppressed suitably. As a result, the driver P can visibly recognize the first image 50 clearly. Likewise, the second screen 44 is inclined forward and upward at an angle of 45 degrees or more relative to the horizontal plane G. Accordingly, the glare on the second screen 44 can be suppressed suitably. As a result, the driver P can visibly recognize the second image 60 clearly.

The first screen 43 is inclined leftward and rearward in plan view of the vehicle. This can suitably suppress difficulty for the driver P in visibility at the left end portion 43L of the first screen 43. As a result, the driver P can visibly recognize even a part of the first image 50 located at the left end portion 43L of the first screen 43 clearly. The second screen 44 is inclined rightward and rearward in plan view of the vehicle. This can suitably suppress difficulty for the driver P in visibility at the right end portion 44R of the second screen 44. As a result, the driver P can visibly recognize even a part of the second image 60 located at the right end portion 44R of the second screen 44 clearly.

The first display 41 and the second display 42 are arranged side by side in the vehicle transverse direction Y. The first display 41 and the second display 42 are spaced apart from each other. The meter unit 29 forms the center space S. The center space S is positioned rightward of the first display 41 and leftward of the second display 42. Accordingly, the center space S is located rightward of the first screen 43 and leftward of the second screen 44. Consequently, an unclear boundary between the first image 50 and the second image 60 can be more suitably suppressed. In addition, the driver P can visibly recognize a road surface and other vehicles forward of the straddled vehicle 1 through the center space S. As described above, the center space S can suitably enhance the visibility in front of the straddled vehicle 1 for the driver P.

As described above, the straddled vehicle 1 allows the driver P to recognize the display contents of the meter unit 29 easily. Moreover, the driver P can visibly recognize the first screen 43 and the second screen 44 clearly. Moreover, the driver P can visibly recognize forward of the straddled vehicle 1 clearly.

The first screen 43 is a rectangle elongated in the transverse direction Y. The second screen 44 is a rectangle elongated in the transverse direction Y. Accordingly, the entire of the first screen 43 and the second screen 44 is much longer in the transverse direction Y. However, even when the entire of the first screen 43 and the second screen 44 is much longer in the transverse direction Y, the straddled vehicle 1 can suitably suppress glare on the first screen 43 and glare on the second screen 44. Moreover, even when the entire of the first screen 43 and the second screen 44 is much longer in the transverse direction Y, the straddled vehicle 1 can suitably provide visibility of the left end portion 43L of the first screen 43 and the right end portion 44R of the second screen 44. Accordingly, the longer the entire of the first screen 43 and the second screen 44 is in the transverse direction Y, the more useful the straddled vehicle 1 becomes.

The first image 50 includes the pictures 51 and 52. The picture 51 indicates a rotation speed of the engine 13. The picture 52 indicates a speed of the straddled vehicle 1. Both the pictures 51 and 52 are displayed on the first screen 43. Accordingly, the pictures 51 and 52 are positioned relatively close to each other. This allows the driver P to grasp the display contents of the picture 51 and the display contents of the picture 52 easily.

The second image 60 does not contain any picture that indicates the rotation speed of the engine 13. The second image 60 does not contain any picture that indicates a speed of the straddled vehicle 1. As described above, the first screen 43 differs from the second screen 44 in display content. Consequently, the driver P can easily recognize the display contents of the meter unit 29.

The meter unit 29 comprises a plurality of the first indicators 45. The first indicators 45 are each located above the first screen 43. Accordingly, the driver P can easily grasp the display contents indicated by the first indicators 45.

The meter unit 29 comprises a plurality of the second indicators 46. The second indicators 46 are each located above the second screen 44. Accordingly, the driver P can easily grasp the display contents indicated by the second indicators 46.

The first indicators 45 are lined up in the leftward and rearward direction. Accordingly, the driver P can visibly recognize each of the first indicators 45 clearly. For example, the driver P can visibly recognize even the first indicators 45a clearly.

The second indicators 46 are lined up in the rightward and rearward direction. Accordingly, the driver P can visibly recognize each of the second indicators 46 clearly. For example, the driver P can visibly recognize even the second indicators 46f clearly.

The meter unit 29 comprises the first eaves part 38. The first eaves part 38 is located above the first screen 43. Accordingly, the first eaves part 38 can suppress the glare on the first screen 43 more.

The meter unit 29 includes the second eaves part 39. The second eaves part 39 is located above the second screen 44. Accordingly, the second eaves part 39 can suppress the glare on the second screen 44 more.

The first eaves part 38 prevents the first screen 43 from being reflected on the windscreen 27. Consequently, the visibility forward of the straddled vehicle 1 for the driver P can be obtained suitably. The driver P can visibly recognize a road surface and other vehicles in front of the straddled vehicle 1 through the windscreen 27 suitably.

The second eaves part 39 prevents the second screen 44 from being reflected on the windscreen 27. Consequently, the forward visibility of the straddled vehicle 1 for the driver P can be provided suitably. The driver P can visibly recognize a road surface and other vehicles forward of the straddled vehicle 1 through the windscreen 27 suitably.

The first eaves part 38 extends from a position more rightward than the first screen 43 to a position more leftward than the first screen 43. Accordingly, the first eaves part 38 can suppress the glare on the first screen 43 more suitably.

The second eaves part 39 extends from a position more rightward than the second screen 44 to a position more leftward than the second screen 44. Accordingly, the second eaves part 39 can suppress the glare on the second screen 44 more suitably.

The first eaves part 38 is located below the first indicators 45. Accordingly, the driver P can visibly recognize both the first screen 43 and the first indicators 45 clearly.

The second eaves part 39 is located below the second indicators 46. Accordingly, the driver P can visibly recognize both the second screen 44 and the second indicators 46 clearly.

The meter unit 29 comprises the first case 31 and the second case 32. The first case 31 accommodates the first display 41. The second case 32 accommodates the second display 42. The first case 31 and the second case 32 are arranged side by side in the transverse direction Y. The first case 31 and the second case 32 are spaced apart from each other. The center space S is located rightward of the first case 31 and leftward of the second case 32. As described above, the first case 31 and the second case 32 can define the center space S suitably.

The meter unit 29 comprises the third case 33. The third case 33 is connected to a right lower portion of the first case 31 and a left lower portion of the second case 32. The third case 33 extends downward from the first case 31 and the second case 32. The center space S is located above the third case 33. Accordingly, the third case 33 hardly obstructs the forward visibility of the straddled vehicle 1 for the driver P. Consequently, the forward visibility for the driver P with respect to the straddled vehicle 1 can be obtained suitably.

The meter unit 29 comprises the first drive board 81, the second drive board 82, and the third drive board 83. The first drive board 81 is accommodated in the first case 31. The first drive board 81 is located in front of the first screen 43. The second drive board 82 is accommodated in the second case 32. The second drive board 82 is located in front of the second screen 44. The third drive board 83 is accommodated in the third case 33. The first drive board 81, the second drive board 82, and the third drive board 83 are connected to one another electrically. The first drive board 81, the second drive board 82, and the third drive board 83 entirely drive the first display 41 and the second display 42. As described above, the drive board configured to drive the first display 41 and the second display 42 is divided into three (i.e., first drive board 81, second drive board 82, and third drive board 83). Accordingly, the first drive board 81, the second drive board 82, and the third drive board 83 can each be reduced in size easily. This can obtain reduction in size of the first case 31, the second case 32, and the third case 33 easily. This can also enhance flexibility in relative position among the first case 31, the second case 32, and the third case 33 suitably. That is, flexibility in shape of the casing 30 can be enhanced suitably.

At least part of the first drive board 81 overlaps at least part of the first screen 43 in rear view of the vehicle. This can obtain reduction in size of the first case 31 more easily.

At least part of the second drive board 82 overlaps at least part of the second screen 44 in rear view of the vehicle. This can obtain reduction in size of the second case 32 more easily.

The third case 33 comprises the insertion port 87. The insertion port 87 is connectable to the cable connector 91. The insertion port 87 is located in the front face 33F of the third case 33. Accordingly, the insertion port 87 is located at a position invisible to the driver P. Consequently, the visibility in front of the straddled vehicle 1 for the driver P can be provided suitably.

The meter unit 29 comprises the casing 30. The casing 30 accommodates the first display 41 and the second display 42. The straddled vehicle 1 includes the bracket 95 and the stay 97. The bracket 95 supports the casing 30. The bracket 95 is made of synthetic resin. The stay 97 supports the bracket 95. The straddled vehicle 1 further includes a plurality of the first elastic bodies 101 and a plurality of the second elastic bodies 102. The first elastic bodies 101 are attached to the casing 30. The bracket 95 supports the casing 30 via the first elastic bodies 101. That is, the first elastic bodies 101 are interposed between the casing 30 and the bracket 95. The second elastic bodies 102 are attached to the bracket 95. The stay 97 supports the bracket 95 via the second elastic bodies 102. That is, the second elastic bodies 102 are interposed between the bracket 95 and the stay 97. In summary, the first elastic bodies 101, the bracket 95, and the second elastic bodies 102 are disposed between the stay 97 and the meter unit 29. The first elastic bodies 101 and the second elastic bodies 102 each absorb vibration. In addition, since the bracket 95 is made of synthetic resin, the bracket 95 itself absorbs vibration. Consequently, bracket 95, the first elastic bodies 101, and the second elastic bodies 102 can suitably suppress transmission of vibration from the stay 97 to the casing 30. As a result, first display 41 and the second display 42 can be protected from vibration suitably.

In particular, the stay 97 extends in the up-down direction Z. The stay 97 has the lower portion 97a and the upper portion 97b. The lower portion 97a is connected to the body frame 2 (head tube 4). The upper portion 97b is connected to the bracket 95 via the second elastic bodies 102. Accordingly, the upper portion 97b swings easily. Vibration of the upper portion 97b is likely to be larger than vibration of the lower portion 97a. However, even if the vibration of the upper portion 97b is large, the bracket 95, the first elastic bodies 101, and the second elastic bodies 102 can suitably suppress transmission of the vibration from the stay 97 to the casing 30. As described above, when the upper portion 97b easily swings, usability of the bracket 95, the first elastic bodies 101, and the second elastic bodies 102 increases.

The number of the first elastic bodies 101 is, for example, eight. The number of the second elastic bodies 102 is, for example, three. As described above, the number of the second elastic bodies 102 is smaller than the number of the first elastic bodies 101. This can simplify the construction in which the stay 97 supports the bracket 95. This results in suitably enhanced flexibility in shape of the stay 97.

The straddled vehicle 1 comprises the handlebar 7 and the windscreen 27. The handlebar 7 is located behind the meter unit 29. The windscreen 27 is located in front of and above the meter unit 29. This can arrange the meter unit 29 at an appropriate position. The driver P can visibly recognize the first screen 43 and the second screen 44 clearly. The driver P can visibly recognize the road surface in front of the straddled vehicle 1.

This invention is not limited to the foregoing examples, but may be modified as follows.
(1) In the embodiment described above, the first image 50 includes the pictures 51 to 59. The first image 50 does not include the pictures 61 to 67 and 71 to 76. In the embodiment described above, the second image 60 includes the pictures 61 to 67 and 71 to 76. The second image 60 does not include the pictures 51 to 59. However, the invention is not limited to this. For example, not the first image 50 but the second image 60 may include the pictures 51 to 59. For example, not the second image 60 but the first image 50 may include the pictures 61 to 67 and 71 to 76.
(2) In the embodiment described above, the first image 50 includes the pictures 51 and 52. In the embodiment described above, the second image 60 does not contain any picture indicating the rotation speed of the engine 13. In the embodiment described above, the second image 60 does not contain any picture indicating the speed of the straddled vehicle 1. However, the invention is not limited to this. For example, the following modification is applicable. The first image 50 does not contain the picture 51. The first image 50 does not contain the picture 52. That is, the first image 50 does not contain any image indicating the rotation speed of the engine 13. The first image 50 does not contain any image indicating the speed of the straddled vehicle 1. The second image 60 contains the pictures 51 and 52. That is, the second image 60 contains an image indicating the rotation speed of the engine 13 and an image indicating the speed of the straddled vehicle 1.
(3) In the embodiment described above, at least either the first display 41 or the second display 42 may be a touch panel display. For example, when the second display 42 is a touch panel display, the second display 42 includes the second screen 44 and a touch panel. The touch panel is located on the second screen 44. The touch panel is transparent. The touch panel detects a position on the second screen 44 where the driver P touches.
(4) In the embodiment described above, the meter unit 29 may include a third electric wire that electrically connects the first drive board 81 to the second drive board 82.
(5) In the embodiment described above, at least part of the center space S does not preferably overlap the bracket 95 in rear view of the vehicle. For example, the entire of the center space S does not overlap the bracket 95 in rear view of the vehicle. For example, part of the center space S does not overlap the bracket 95 in rear view of the vehicle, and other part of the center space S overlaps the bracket 95 in rear view of the vehicle. In other words, the center space S includes a part that does not overlap the bracket 95 in rear view of the vehicle, and a part that overlaps the bracket 95 in rear view of the vehicle.
(6) In the embodiment described above, the straddled vehicle 1 has been illustrated as an example of street type vehicles. The invention is not limited to this. The straddled vehicle 1 may be changed to vehicles of other types, such as the sport type or a vehicle for irregular grounds (all-terrain vehicle).
(7) In the embodiment described above, the number of front wheels 11 included in the straddled vehicle 1 is one. The invention is not limited to this. The number of front wheels 11 included in the straddled vehicle 1 may be two. In the embodiment described above, the number of rear wheels 22 included in the straddled vehicle 1 is one. The invention is not limited to this. The number of rear wheels 22 included in the straddled vehicle 1 may be two.
(8) In the embodiment described above, the straddled vehicle 1 includes the engine (internal combustion engine) 13 as a power source. However, the invention is not limited to this. For example, the straddled vehicle 1 may have an electric motor as another power source in addition to the engine 13. For example, the straddled vehicle 1 may have an electric motor as a power source instead of the engine 13.

It will be appreciated that the term straddled vehicle or motor vehicle used herein, and as used in the art, is meant to include at least the following terms used in the art:
straddled vehicle or motor vehicle, straddle-type vehicle or motor vehicle, saddle-straddling (type) vehicle or motor vehicle, and includes: motorcycles, and motorbikes as well as tricycles, quad bikes, All Terrain Vehicles (ATVs), scooters, mopeds and snowmobiles

## Claims

1. A straddled vehicle (1) comprising:
a meter unit (29),
the meter unit (29) comprising:
a first display (41) provided with a first screen (43) on which a first image (50) is displayable or displayed; and
a second display (42) provided with a second screen (44) on which a second image (60) is displayable or displayed,
the first screen (43) being located leftward of a vehicle center plane (C) perpendicular with respect to a transverse direction (Y) of the vehicle,
the second screen (44) being located rightward of the vehicle center plane (C),
the second screen (44) being substantially equal to the first screen (43) in size,
the first screen (43) and the second screen (44) being each inclined forward and upward at an angle (θ1) of 45 degrees or more relative to a horizontal plane (G),
the first screen (43) being inclined leftward and rearward in plan view of the vehicle,
the second screen (44) being inclined rightward and rearward in plan view of the vehicle,
the first display (41) and the second display (42) being arranged side-by-side in the vehicle transverse direction (Y) of the vehicle and being spaced apart from each other, and
the meter unit (29) forming a center space (S) positioned rightward of a first case (31) of the first display (41) and leftward of a second case (32) of the second display (42). (42), the center space (S) being formed between the first case (31) and the second case (32) such that the driver can visibly recognize a road surface and other vehicles in front of the straddled vehicle (1) through the center space (S).

2. The straddled vehicle (1) according to claim 1, wherein
the first screen (43) is a rectangle elongated in the vehicle transverse direction (Y) of the vehicle, and
the second screen (44) is a rectangle elongated in the vehicle transverse direction (Y) of the vehicle.

3. The straddled vehicle (1) according to claim 1 or 2, wherein
one of the first image (50) and the second image (60) comprises a third image (51) indicating an engine speed of the straddled vehicle (1), and a fourth image (52) indicating a speed of the straddled vehicle (1), and
the other of the first image (50) and the second image (60) comprises neither an image indicating the engine speed of the straddled vehicle (1) nor an image indicating the speed of the straddled vehicle (1).

4. The straddled vehicle (1) according to any one of claims 1 to 3, wherein
the meter unit (29) comprises:
a plurality of first indicators (45) located above the first screen (43), and
a plurality of second indicators (46) located above the second screen (44).

5. The straddled vehicle (1) according to claim 4, wherein
the first indicators (45) are lined up in a leftward and rearward direction, and
the second indicators (46) are lined up in a rightward and rearward direction.

6. The straddled vehicle (1) according to any one of claims 1 to 5, wherein
the meter unit (29) comprises:
a first eaves part (38) located above the first screen (43), and
a second eaves part (39) located above the second screen (44).

7. The straddled vehicle (1) according to claim 6, wherein
the first eaves part (38) extends from a position more rightward than the first screen (43) to a position more leftward than the first screen (43), and
the second eaves part (39) extends from a position more rightward than the second screen (44) to a position more leftward than the second screen (44).

8. The straddled vehicle (1) according to any one of claims 1 to 7, wherein
the meter unit (29) comprises:
a first case (31) configured to accommodate the first display (41), and
a second case (32) configured to accommodate the second display (42),
the first case (31) and the second case (32) are arranged side-by-side in the vehicle transverse direction (Y) of the vehicle and are spaced apart from each other, and
the center space (S) is arranged rightward of the first case (31) and leftward of the second case (32).

9. The straddled vehicle (1) according to claim 8, wherein
the meter unit (29) comprises:
a third case (33) connected to a right lower portion of the first case (31) and a left lower portion of the second case (32), and extending downward from the first case (31) and the second case (32),
and
the center space (S) is located above the third case (33).

10. The straddled vehicle (1) according to claim 9, wherein
the meter unit (29) comprises:
a first drive board (81) accommodated in the first case (31) and located in front of the first screen (43),
a second drive board (82) accommodated in the second case (32) and located in front of the second screen (44), and
a third drive board (83) accommodated in the third case (33),
the first drive board (81), the second drive board (82), and the third drive board (83) are connected to one another electrically, and
the first drive board (81), the second drive board (82), and the third drive board (83) entirely drive the first display (41) and the second display (42).

11. The straddled vehicle (1) according to claim 10, wherein
at least part of the first drive board (81) overlaps at least part of the first screen (43) in rear view of the vehicle, and
at least part of the second drive board (82) overlaps at least part of the second screen (44) in rear view of the vehicle.

12. The straddled vehicle (1) according to any one of claims 9 to 11, wherein
the third case (33) has an insertion port (87) located in a front face (33F) of the third case (33) and connectable to a cable connector (91).

13. The straddled vehicle (1) according to any one of claims 1 to 12, wherein
the meter unit (29) comprises:
a casing (30) configured to accommodate the first display (41) and the second display (42), and
the straddled vehicle (1) further comprises:
a plurality of first elastic bodies (101) attached to the casing (30),
a bracket (95) made of synthetic resin and configured to support the casing (30) via the first elastic bodies (101),
a plurality of second elastic bodies (102) attached to the bracket (95), and
a stay (97) configured to support the bracket (95) via the second elastic bodies (102).

14. The straddled vehicle (1) according to claim 13, wherein
the number of the second elastic bodies (102) is smaller than the number of the first elastic bodies (101).

15. The straddled vehicle (1) according to any one of claims 1 to 14, further comprising:
a handlebar (7) located behind the meter unit (29), and
a windscreen (27) located forward and above the meter unit (29)

## Patentansprüche

1. Grätschsitzfahrzeug (1), das Folgendes umfasst:
eine Zählereinheit (29),
wobei die Zählereinheit (29) Folgendes umfasst:
eine erste Anzeige (41), die mit einem ersten Bildschirm (43) versehen ist, auf dem ein erstes Bild (50) anzeigbar oder angezeigt ist, und
eine zweite Anzeige (42), die mit einem zweiten Bildschirm (44) versehen ist, auf dem ein zweites Bild (60) anzeigbar oder angezeigt ist,
wobei sich der erste Bildschirm (43) links von einer Fahrzeugmittelebene (C), senkrecht in Bezug auf eine Querrichtung (Y) des Fahrzeugs, befindet,
wobei sich der zweite Bildschirm (44) rechts von der Fahrzeugmittelebene (C) befindet,
wobei der zweite Bildschirm (44) dem ersten Bildschirm (43) in der Größe im Wesentlichen gleich ist,
wobei der erste Bildschirm (43) und der zweite Bildschirm (44) jeweils in einem Winkel (θ1) von 45 Grad oder mehr im Verhältnis zu einer horizontalen Ebene (G) nach vorn und nach oben geneigt sind,
wobei der erste Bildschirm (43) in einer Draufsicht des Fahrzeugs nach links und nach hinten geneigt ist,
wobei der zweite Bildschirm (44) in einer Draufsicht des Fahrzeugs nach rechts und nach hinten geneigt ist,
wobei die erste Anzeige (41) und die zweite Anzeige (42) nebeneinander in der Fahrzeugquerrichtung (Y) des Fahrzeugs angeordnet sind und voneinander beabstandet sind, und
wobei die Zählereinheit (29) einen Mittelraum (S) bildet, der rechts von einem ersten Gehäuse (31) der ersten Anzeige (41) und links von einem zweiten Gehäuse (32) der zweiten Anzeige (42). (42) positioniert ist, wobei der Mittelraum (S) derart zwischen dem ersten Gehäuse (31) und dem zweiten Gehäuse (32) ausgebildet ist, dass der Fahrer eine Straßenoberfläche und andere Fahrzeuge vor dem Grätschsitzfahrzeug (1) sichtbar durch den Mittelraum (S) erkennen kann.

2. Grätschsitzfahrzeug (1) nach Anspruch 1, wobei
der erste Bildschirm (43) ein in der Fahrzeugquerrichtung (Y) des Fahrzeugs gestrecktes Rechteck ist, und
der zweite Bildschirm (44) ein in der Fahrzeugquerrichtung (Y) des Fahrzeugs gestrecktes Rechteck ist.

3. Grätschsitzfahrzeug (1) nach Anspruch 1 oder 2, wobei
eines von dem ersten Bild (50) und dem zweiten Bild (60) ein drittes Bild (51), das eine Motordrehzahl des Grätschsitzfahrzeugs (1) angibt, und ein viertes Bild (52), das eine Geschwindigkeit des Grätschsitzfahrzeugs (1) angibt, umfasst, und
das andere von dem ersten Bild (50) und dem zweiten Bild (60) weder ein Bild, das die Motordrehzahl des Grätschsitzfahrzeugs (1) angibt, noch ein Bild, das die Geschwindigkeit des Grätschsitzfahrzeugs (1) angibt, umfasst.

4. Grätschsitzfahrzeug (1) nach einem der Ansprüche 1 bis 3, wobei
die Zählereinheit (29) Folgendes umfasst:
eine Vielzahl von ersten Anzeigern (45), die sich oberhalb des ersten Bildschirms (43) befinden, und
eine Vielzahl von zweiten Anzeigern (46), die sich oberhalb des zweiten Bildschirms (44) befinden.

5. Grätschsitzfahrzeug (1) nach Anspruch 4, wobei
die ersten Anzeiger (45) in einer Richtung nach links und nach hinten aufgereiht sind, und
die zweiten Anzeiger (46) in einer Richtung nach rechts und nach hinten aufgereiht sind.

6. Grätschsitzfahrzeug (1) nach einem der Ansprüche 1 bis 5, wobei
die Zählereinheit (29) Folgendes umfasst:
einen ersten Traufenteil (38), der sich oberhalb des ersten Bildschirms (43) befindet, und
einen zweiten Traufenteil (39), der sich oberhalb des zweiten Bildschirms (44) befindet.

7. Grätschsitzfahrzeug (1) nach Anspruch 6, wobei
sich der erste Traufenteil (38) von einer Position, weiter rechts als der erste Bildschirm (43), bis zu einer Position, weiter links als der erste Bildschirm (43), erstreckt, und
sich der zweite Traufenteil (39) von einer Position, weiter rechts als der zweite Bildschirm (44), bis zu einer Position, weiter links als der zweite Bildschirm (44), erstreckt.

8. Grätschsitzfahrzeug (1) nach einem der Ansprüche 1 bis 7, wobei
die Zählereinheit (29) Folgendes umfasst:
ein erstes Gehäuse (31), das dafür konfiguriert ist, die erste Anzeige (41) aufzunehmen, und
ein zweites Gehäuse (32), das dafür konfiguriert ist, die zweite Anzeige (42) aufzunehmen,
das erste Gehäuse (31) und das zweite Gehäuse (32) nebeneinander in der Fahrzeugquerrichtung (Y) des Fahrzeugs angeordnet sind und voneinander beabstandet sind, und
wobei der Mittelraum (S) rechts von dem ersten Gehäuse (31) und links von dem zweiten Gehäuse (32) angeordnet ist.

9. Grätschsitzfahrzeug (1) nach Anspruch 8, wobei
die Zählereinheit (29) Folgendes umfasst:
ein drittes Gehäuse (33), das mit einem rechten unteren Abschnitt des ersten Gehäuses (31) und einem linken unteren Abschnitt des zweiten Gehäuses (32) verbunden ist, und sich von dem ersten Gehäuse (31) und dem zweiten Gehäuse (32) aus nach unten erstreckt,
und
sich der Mittelraum (S) oberhalb des dritten Gehäuses (33) befindet.

10. Grätschsitzfahrzeug (1) nach Anspruch 9, wobei
die Zählereinheit (29) Folgendes umfasst:
eine erste Antriebsplatine (81), die in dem ersten Gehäuse (31) untergebracht ist und sich vor dem ersten Bildschirm (43) befindet,
eine zweite Antriebsplatine (82), die in dem zweiten Gehäuse (32) untergebracht und sich vor dem zweiten Bildschirm (44) befindet, und
eine dritte Antriebsplatine (83), die in dem dritten Gehäuse (33) untergebracht ist,
wobei die erste Antriebsplatine (81), die zweite Antriebsplatine (82) und die dritte Antriebsplatine (83) elektrisch miteinander verbunden sind, und
wobei die erste Antriebsplatine (81), die zweite Antriebsplatine (82) und die dritte Antriebsplatine (83) die erste Anzeige (41) und die zweite Anzeige (42) vollständig antreiben.

11. Grätschsitzfahrzeug (1) nach Anspruch 10, wobei
mindestens ein Teil der ersten Antriebsplatine (81) mindestens einen Teil des ersten Bildschirms (43) in einer Rückansicht des Fahrzeugs überlappt, und
mindestens ein Teil der zweiten Antriebsplatine (82) mindestens einen Teil des zweiten Bildschirms (44) in einer Rückansicht des Fahrzeugs überlappt.

12. Grätschsitzfahrzeug (1) nach einem der Ansprüche 9 bis 11, wobei
das dritte Gehäuse (33) einen Einsteckanschluss (87) aufweist, der sich in einer vorderen Fläche (33F) des dritten Gehäuses (33) befindet und mit einem Kabelverbinder (91) verbindbar ist.

13. Grätschsitzfahrzeug (1) nach einem der Ansprüche 1 bis 12, wobei
die Zählereinheit (29) Folgendes umfasst:
ein Gehäuse (30), das dafür konfiguriert ist, die erste Anzeige (41) und die zweite Anzeige (42) aufzunehmen, und
das Grätschsitzfahrzeug ferner Folgendes umfasst:
eine Vielzahl von ersten elastischen Körpern (101), die an dem Gehäuse (30) angebracht sind,
eine Klammer (95), die aus synthetischem Harz besteht und dafür konfiguriert ist, das Gehäuse (30) über die ersten elastischen Körper (101) zu tragen,
eine Vielzahl von zweiten elastischen Körpern (102), die an der Klammer (95) angebracht sind, und
eine Strebe (97), die dafür konfiguriert ist, die Klammer (95) über die zweiten elastischen Körper (102) zu tragen.

14. Grätschsitzfahrzeug (1) nach Anspruch 13, wobei
die Anzahl der zweiten elastischen Körper (102) kleiner ist als die Anzahl der ersten elastischen Körper (101).

15. Grätschsitzfahrzeug (1) nach einem der Ansprüche 1 bis 14, das ferner Folgendes umfasst:
einen Lenker (7), der sich hinter der Zählereinheit (29) befindet, und
einen Windschutz (27), der sich vor und über der Zählereinheit (29) befindet.

## Revendications

1. Véhicule à enfourcher (1), comprenant :
une unité de compteur (29),
l'unité de compteur (29) comprenant :
un premier affichage (41) muni d'un premier écran (43) sur lequel une première image (50) est affichable ou affichée ; et
un deuxième affichage (42) muni d'un deuxième écran (44) sur lequel une deuxième image (60) est affichable ou affichée,
le premier écran (43) étant situé à gauche d'un plan médian du véhicule (C) perpendiculaire à une direction transversale (Y) du véhicule,
le deuxième écran (44) étant situé à droite du plan médian du véhicule (C),
le deuxième écran (44) ayant une taille sensiblement égale au premier écran (43),
le premier écran (43) et le deuxième écran (44) étant chacun inclinés vers l'avant et vers le haut à un angle (θ1) de 45 degrés ou plus par rapport à un plan horizontal (G),
le premier écran (43) étant incliné vers la gauche et vers l'arrière dans une vue en plan du véhicule,
le deuxième écran (44) étant incliné vers la droite et vers l'arrière dans la vue en plan du véhicule,
le premier affichage (41) et le deuxième affichage (42) étant agencés côte à côte dans la direction transversale (Y) du véhicule et étant espacés l'un de l'autre, et
l'unité de compteur (29) formant un espace central (S) positionné à droite d'un premier boîtier (31) du premier affichage (41) et à gauche d'un deuxième boîtier (32) du deuxième affichage (42). (42), l'espace central (S) étant formé entre le premier boîtier (31) et le deuxième boîtier (32) de sorte que le conducteur puisse reconnaître de manière visible une surface de route et d'autres véhicules devant le véhicule à enfourcher (1) à travers l'espace central (S).

2. Véhicule à enfourcher (1) selon la revendicaiton1, dans lequel
le premier écran (43) est un rectangle allongé dans la direction transversale (Y) du véhicule, et
le deuxième écran (44) est un rectangle allongé dans la direction transversale (Y) du véhicule

3. Véhicule à enfourcher (1) selon les revendications 1 ou 2, dans lequel
l'une de la première image (50) et de la deuxième image (60) comprend une troisième image (51) indiquant une vitesse du moteur du véhicule à enfourcher (1), et une quatrième image (52) indiquant une vitesse du véhicule à enfourcher (1), et
l'autre de la première image (50) et de la deuxième image (60) ne comprend ni une image indiquant la vitesse du moteur du véhicule à enfourcher (1) ni une image indiquant la vitesse du véhicule à enfourcher (1).

4. Véhicule à enfourcher (1) selon l'une quelconque des revendications 1 à 3, dans lequel
l'unité de compteur (29) comprend :
une pluralité de premiers indicateurs (45) situés au-dessous du premier écran (43), et
une pluralité de deuxièmes indicateurs (46) situés au-dessous du deuxième écran (44).

5. Véhicule à enfourcher (1) selon la revendication 4, dans lequel
les premiers indicateurs (45) sont alignés dans une direction allant vers la gauche et vers l'arrière, et
les deuxièmes indicateurs (46) sont alignés dans une direction allant vers la droite et vers l'arrière.

6. Véhicule à enfourcher (1) selon l'une quelconque des revendications 1 à 5, dans lequel
l'unité de compteur (29) comprend :
une première partie de débord (38) située au-dessous du premier écran (43), et
une deuxième partie de débord (39) située au-dessous du deuxième écran (44).

7. Véhicule à enfourcher (1) selon la revendication 6, dans lequel
la première partie de débord (38) s'étend d'une position plus à droite que le premier écran (43) vers une position plus à gauche que le premier écran (43), et
la deuxième partie de débord (39) s'étend d'une position plus à droite que le deuxième écran (44) vers une position plus à gauche que le deuxième écran (44).

8. Véhicule à enfourcher (1) selon l'une quelconque des revendications 1 à 7, dans lequel
l'unité de compteur (29) comprend :
un premier boîtier (31) configuré pour recevoir le premier affichage (41), et
un deuxième boîtier (32) configuré pour recevoir le deuxième affichage (42),
le premier boîtier (31) et le deuxième boîtier (32) sont disposés côte à côte dans la direction transversale (Y) du véhicule et sont espacés l'un de l'autre, et
l'espace central (S) est agencé à droite du premier boîtier (31) et à gauche du deuxième boîtier (32).

9. Véhicule à enfourcher (1) selon la revendication 8, dans lequel
l'unité de compteur (29) comprend :
un troisième boîtier (33) relié à une partie inférieure droite du premier boîtier (31) et à une partie inférieure gauche du deuxième boîtier (32), et s'étendant vers le bas depuis le premier boîtier (31) et le deuxième boîtier (32),
et
l'espace central (S) est situé au-dessous du troisième boîtier (33).

10. Véhicule à enfourcher (1) selon la revendication 9, dans lequel
l'unité de compteur (29) comprend :
une première carte de commande (81) reçue dans le premier boîtier (31) et située devant le premier écran (43),
une deuxième carte de commande (82) reçue dans le deuxième boîtier (32) et située devant le deuxième écran (44), et
une troisième carte de commande (83) reçue dans le troisième boîtier (33),
la première carte de commande (81), la deuxième carte de commande (82) et la troisième carte de commande (83) sont connectées électriquement les unes aux autres, et
la première carte de commande (81), la deuxième carte de commande (82) et la troisième carte de commande (83) commandent entièrement le premier affichage (41) et le deuxième affichage (42).

11. Véhicule à enfourcher (1) selon la revendication 10, dans lequel
au moins une partie de la première carte de commande (81) chevauche au moins une partie du premier écran (43) dans une vue arrière du véhicule, et
au moins une partie de la deuxième carte de commande (82) chevauche au moins une partie du deuxième écran (44) dans une vue arrière du véhicule.

12. Véhicule à enfourcher (1) selon l'une quelconque des revendications 9 à 11, dans lequel
le troisième boîtier (33) comporte un orifice d'insertion (87) situé dans une face avant (33F) du troisième boîtier (33) et pouvant être connecté à un connecteur de câblé (91).

13. Véhicule à enfourcher (1) selon l'une quelconque des revendications 1 à 12, dans lequel
l'unité de compteur (29) comprend :
un boîtier (30) configuré pour recevoir le premier affichage (41) et le deuxième affichage (42), et
le véhicule à enfourcher (1) comprend en outre :
une pluralité de premiers corps élastiques (101) fixés sur le boîtier (30),
une attache (95) constituée de résine synthétique et configurée pour supporter le boîtier (30) *via* les premiers corps élastiques (101),
une pluralité de deuxièmes corps élastiques (102) fixés sur l'attache(95), et
un support (97) configuré pour supporter l'attache (95) *via* les deuxièmes corps élastiques (102).

14. Véhicule à enfourcher (1) selon la revendication 13, dans lequel
le nombre des deuxièmes corps élastiques (102) est inférieur au nombre des premiers corps élastiques (101).

15. Véhicule à enfourcher (1) selon l'une quelconque des revendications 1 à 14, comprenant en outre :
un guidon (7) situé derrière l'unité de compteur (29), et
un pare-brise (27) situé devant et au-dessus de l'unité de compteur (29).
